# EUROPEAN PATENT APPLICATION

(11) **EP 4 417 434 A1**
(43) Date of publication of application: **21.08.2024**
(21) Application number: 24156994.6
(22) Date of filing: 12.02.2024
(51) Int. Cl.: B41M 5/00, B41J 3/407, B05B 13/04, B25J 11/00

(54) **THREE-DIMENSIONAL OBJECT PRINTING APPARATUS AND PRINTING METHOD**

(30) Priority: 14.02.2023 JP 2023020955
(71) Applicant: Seiko Epson Corporation, Tokyo 160-8801 (JP)
(72) Inventor: UTSUNOMIYA, Kohei, Suwa-shi, 392-8502 (JP)
(74) Representative: Lewis Silkin LLP

(57) **Abstract**

A three-dimensional object printing apparatus prints on a workpiece including a first printing region onto which a liquid is applied in a first printing operation and a second printing region onto which the liquid is applied in a second printing operation. When, in an overlapping region in which the first printing region and the second printing region overlap with each other, a region in which an ejection distance of the liquid from a plurality of nozzles to the overlapping region in the first printing operation is less than an ejection distance of the liquid from the plurality of nozzles to the overlapping region in the second printing operation is set as a first overlapping region, in the first overlapping region, a ratio of recording pixels by the first printing operation is more than a ratio of recording pixels by the second printing operation.

## Description

The present application is based on, and claims priority from JP Application Serial Number 2023-020955, filed February 14, 2023, the disclosure of which is hereby incorporated by reference herein in its entirety.

### BACKGROUND

### 1. Technical Field

The present disclosure relates to a three-dimensional object printing apparatus and a printing method.

### 2. Related Art

In the related art, an apparatus that performs printing on a surface of a three-dimensional workpiece by an inkjet method using a robot is known. For example, in JP-A-2022-70443, a printing operation is disclosed in which a first printing operation of performing printing on a first region on a surface of a workpiece, and then a second printing operation of performing printing on a second region different from the first region on the surface of the workpiece. Here, in the first printing operation, a liquid ejection head ejects an ink toward the first region while a robot moves the liquid ejection head along a first movement path. In the second printing operation, the liquid ejection head ejects the ink toward the second region while the robot moves the liquid ejection head along a second movement path different from the first movement path.

JP-A-2022-70443 does not disclose how a recording ratio by the first printing operation and the second printing operation is set with respect to a region in which the first region and the second region overlap with each other. Under such situation, it is desired to perform printing at an appropriate recording ratio to reduce deterioration in printing image quality.

### SUMMARY

According to an aspect of the present disclosure, there is provided a three-dimensional object printing apparatus including: a head having a plurality of nozzles; a robot that moves the head with respect to a three-dimensional workpiece; and a control portion that sequentially executes a first printing operation and a second printing operation as a printing operation of ejecting a liquid from the head toward a printing region of the workpiece while operating the robot, in which when a region on the workpiece onto which the liquid is applied in the first printing operation is set as a first printing region, a region on the workpiece onto which the liquid is applied in the second printing operation is set as a second printing region, a region in which the first printing region and the second printing region overlap with each other is set as an overlapping region, and in the overlapping region, a region in which an ejection distance of the liquid from the plurality of nozzles to the overlapping region in the first printing operation is less than an ejection distance of the liquid from the plurality of nozzles to the overlapping region in the second printing operation is set as a first overlapping region, in the first overlapping region, a ratio of recording pixels by the first printing operation is more than a ratio of recording pixels by the second printing operation.

According to another aspect of the present disclosure, there is provided a three-dimensional object printing apparatus including: a head provided with a plurality of nozzles; a robot that relatively moves the head with respect to a three-dimensional workpiece; and a control portion that sequentially executes a first printing operation and a second printing operation as a printing operation of ejecting a liquid from the head toward a printing region of the workpiece while operating the robot, in which when a region on the workpiece onto which the liquid is applied in the first printing operation is set as a first printing region, a region on the workpiece onto which the liquid is applied in the second printing operation is set as a second printing region, a region in which the first printing region and the second printing region overlap with each other is set as an overlapping region, and in the overlapping region, a region in which a landing angle of the liquid from the plurality of nozzles to the overlapping region in the first printing operation is closer to 90° than a landing angle of the liquid from the plurality of nozzles to the overlapping region in the second printing operation is set as a first overlapping region, in the first overlapping region, a ratio of recording pixels by the first printing operation is more than a ratio of recording pixels by the second printing operation.

### BRIEF DESCRIPTION OF THE DRAWINGS

FIG. 1 is a perspective view illustrating an overview of a three-dimensional object printing apparatus according to a first embodiment.
FIG. 2 is a block diagram illustrating an electrical configuration of the three-dimensional object printing apparatus according to the first embodiment.
FIG. 3 is a perspective view illustrating a schematic configuration of a head unit.
FIG. 4 is a diagram illustrating a flow of a printing operation setting method of the three-dimensional object printing apparatus according to the first embodiment.
FIG. 5 is a diagram describing a first step of a candidate path creation step.
FIG. 6 is a diagram describing details of a surface of a workpiece in a virtual space.
FIG. 7 is a diagram describing details of a sub-scanning reference line.
FIG. 8 is a diagram describing a second step of the candidate path creation step.
FIG. 9 is a diagram describing a third step of the candidate path creation step.
FIG. 10 is a diagram illustrating a method of setting a candidate path.
FIG. 11 is a diagram describing an ejection condition acquisition step and an ejection width information acquisition step.
FIG. 12 is a diagram describing a printing path selection step.
FIG. 13 is a diagram describing selection of a printing path based on ejection condition information and printing width information.
FIG. 14 is a diagram describing the printing path.
FIG. 15 is a diagram describing a print data generation step.
FIG. 16 is a diagram describing a printing region in the first embodiment.
FIG. 17 is a flowchart illustrating a first example of a method of setting a recording ratio.
FIG. 18 is a flowchart illustrating a second example of the method of setting the recording ratio.
FIG. 19 is a schematic diagram illustrating a relationship between print data and a mask.
FIG. 20 is a diagram describing a setting of the recording ratio by using the mask illustrated in FIG. 19.
FIG. 21 is a diagram describing the recording ratio in an overlapping region.
FIG. 22 is a diagram illustrating an example of a relationship between a position in a sub-scanning direction and the recording ratio of each path when the recording ratio of each path is changed in the overlapping region.
FIG. 23 is a diagram illustrating a relationship between the position in the sub-scanning direction and the recording ratio of all paths when the recording ratio of each path is changed in the overlapping region.
FIG. 24 is a diagram illustrating an example of a relationship between the position in the sub-scanning direction and a recording ratio of each path in a comparative example in which the recording ratio of each path is constant in an overlapping region.
FIG. 25 is a diagram illustrating a relationship between the position in the sub-scanning direction and a recording ratio of all paths in the comparative example in which the recording ratio of each path is constant in the overlapping region.
FIG. 26 is a diagram describing a recording ratio of each position in a main scanning direction.
FIG. 27 is a diagram illustrating a printing path according to a second embodiment.
FIG. 28 is a diagram illustrating the printing path according to the second embodiment.
FIG. 29 is a diagram describing a printing region according to the second embodiment.

### DESCRIPTION OF EMBODIMENTS

Hereinafter, appropriate embodiments according to the present disclosure will be described with reference to the accompanying drawings. In the drawings, dimensions and scale of each portion are appropriately different from the actual ones, and some portions are schematically illustrated for easy understanding. In addition, the scope of the present disclosure is not limited to the forms unless the present disclosure is particularly limited in the following description.

In the following, for convenience of description, an X-axis, a Y-axis, and a Z-axis that intersect with each other are appropriately used. In the following, one direction along the X-axis is an X1 direction, and a direction opposite to the X1 direction is an X2 direction. In the same manner, directions opposite to each other along the Y-axis are a Y1 direction and a Y2 direction. Further, directions opposite to each other along the Z-axis are a Z1 direction and a Z2 direction.

Here, the X-axis, the Y-axis, and the Z-axis correspond to the coordinate axes of a world coordinate system set in a space in which a robot 2, which will be described below, is installed. Typically, the Z-axis is a vertical axis, and the Z2 direction corresponds to a downward direction in a vertical direction. A base coordinate system based on a position of a base portion 210, which will be described below, of the robot 2 is associated with the world coordinate system by calibration. In the following, for convenience, a case where an operation of the robot 2 is controlled by using the world coordinate system as a robot coordinate system will be illustrated.

The Z-axis may not be the vertical axis. Further, the X-axis, the Y-axis, and the Z-axis are typically orthogonal to each other, but the present disclosure is not limited to this, and the X-axis, the Y-axis, and the Z-axis may not be orthogonal to each other. For example, the X-axis, Y-axis, and Z-axis may intersect with each other at an angle within a range equal to or more than 80° and equal to or less than 100°.

### 1-1. Overview of Three-dimensional Object Printing Apparatus

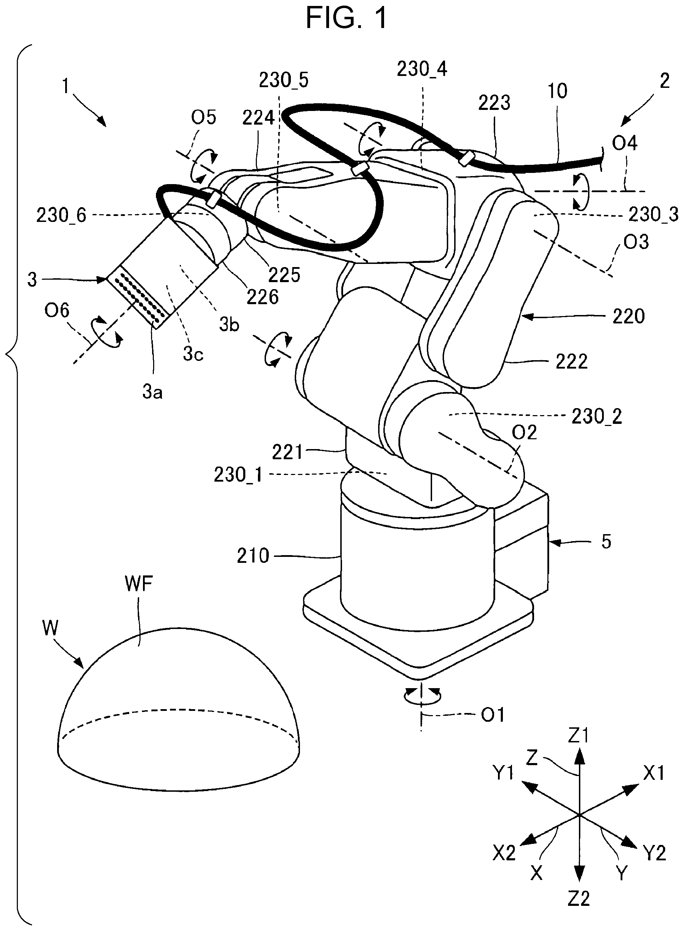

FIG. 1 is a perspective view illustrating an overview of a three-dimensional object printing apparatus 1 according to a first embodiment. The three-dimensional object printing apparatus 1 is an apparatus that performs printing on a surface of a three-dimensional workpiece W by an inkjet method.

The workpiece W has a surface WF as a printing target. In the example illustrated in FIG. 1, the workpiece W is a hemispherical body, and the surface WF is a projecting hemispherical surface. For example, the workpiece W at a time of printing is supported by a structure such as a predetermined setting table, a hand of a robot other than the robot 2, which will be described below, or a conveyor, as needed. A size, a shape, or an installation posture of the workpiece W is not limited to the example illustrated in FIG. 1, and is any size, shape, or installation posture. Meanwhile, when the surface WF is a curved surface, effects of the present disclosure, which will be described below, become remarkable.

As illustrated in FIG. 1, the three-dimensional object printing apparatus 1 includes the robot 2, a head unit 3, a controller 5, and a piping portion 10. Hereinafter, first, the robot 2, the head unit 3, the controller 5, and the piping portion 10 will be briefly described in order.

The robot 2 is a robot that changes a position and a posture of the head unit 3 in the world coordinate system. In the example illustrated in FIG. 1, the robot 2 is a so-called 6-axis vertical articulated robot.

As illustrated in FIG. 1, the robot 2 has the base portion 210 and an arm portion 220.

The base portion 210 is a base that supports the arm portion 220. In the example illustrated in FIG. 1, the base portion 210 is fixed to a floor surface facing the Z1 direction or an installation surface such as a base by screwing or the like. The installation surface to which the base portion 210 is fixed may be a surface facing in any direction, is not limited to the example illustrated in FIG. 1, and may be, for example, a surface provided by a wall, a ceiling, a movable trolley, or the like.

The arm portion 220 is a 6-axis robot arm having a base end attached to the base portion 210 and a tip that changes a position and a posture three-dimensionally with respect to the base end. Specifically, the arm portion 220 has arms 221, 222, 223, 224, 225, and 226 also referred to as links, which are coupled in this order.

The arm 221 is rotatably coupled to the base portion 210 around a rotation axis O1 via a joint 230_1. The arm 222 is rotatably coupled to the arm 221 around a rotation axis O2 via a joint 230_2. The arm 223 is rotatably coupled to the arm 222 around a rotation axis O3 via a joint 230_3. The arm 224 is rotatably coupled to the arm 223 around a rotation axis O4 via a joint 230_4. The arm 225 is rotatably coupled to the arm 224 around a rotation axis O5 via a joint 230_5. The arm 226 is rotatably coupled to the arm 225 around a rotation axis O6 via a joint 230_6.

Each of the joints 230_1 to 230_6 is a mechanism for rotatably coupling one of two adjacent members of the base portion 210 and the arms 221 to 226 to the other. In the following, each of the joints 230_1 to 230_6 may be referred to as a "joint 230".

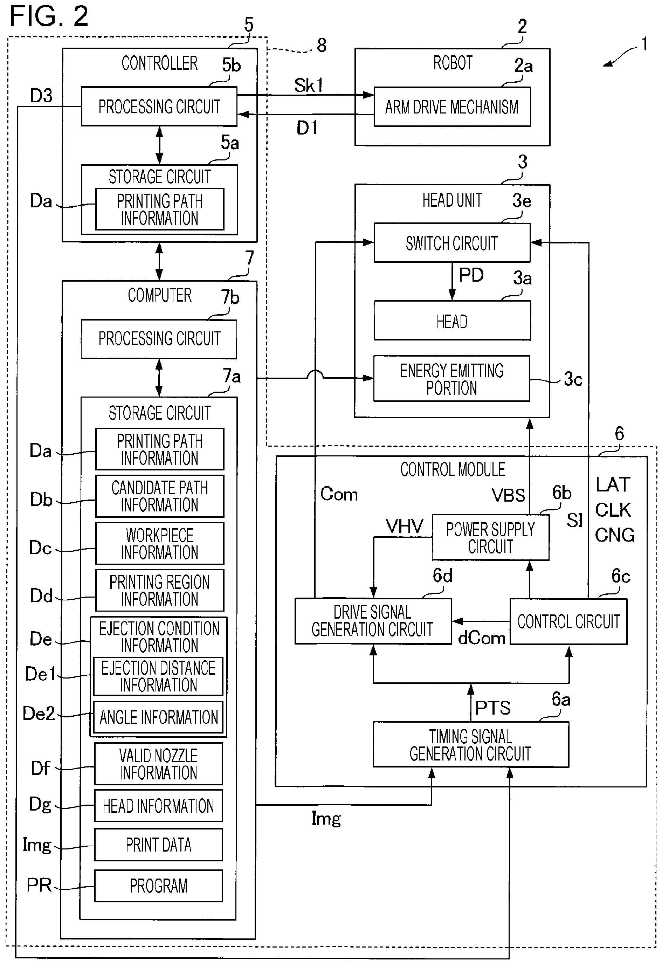

Although not illustrated in FIG. 1, each of the joints 230_1 to 230_6 is provided with a drive mechanism for rotating one of the two adjacent members corresponding to each other to the other. The drive mechanism includes, for example, a motor that generates a drive force for the rotation, a speed reducer that decelerates and outputs the drive force, an encoder such as a rotary encoder that detects the operation amount such as an angle of the rotation, and the like. An aggregation of the drive mechanisms of the joints 230_1 to 230_6 corresponds to an arm drive mechanism 2a illustrated in FIG. 2, which will be described below.

The rotation axis O1 is an axis perpendicular to the installation surface (not illustrated) to which the base portion 210 is fixed. The rotation axis O2 is an axis perpendicular to the rotation axis O1. The rotation axis O3 is an axis parallel with the rotation axis 02. The rotation axis O4 is an axis perpendicular to the rotation axis O3. The rotation axis O5 is an axis perpendicular to the rotation axis O4. The rotation axis O6 is an axis perpendicular to the rotation axis O5.

Regarding these rotation axes, "perpendicular" includes not only a case where an angle formed by the two rotation axes is strictly 90°, but also a case where the angle formed by the two rotation axes deviates within a range of approximately 90° to ±5°. In the same manner, "parallel" includes not only a case where the two rotation axes are strictly parallel with each other, but also a case where one of the two rotation axes is inclined within a range of approximately ±5° with respect to the other.

The head unit 3 is mounted on the arm 226 located at the most tip among the arms 221 to 226 of the above robot 2, in a state of being fixed by screwing or the like as an end effector.

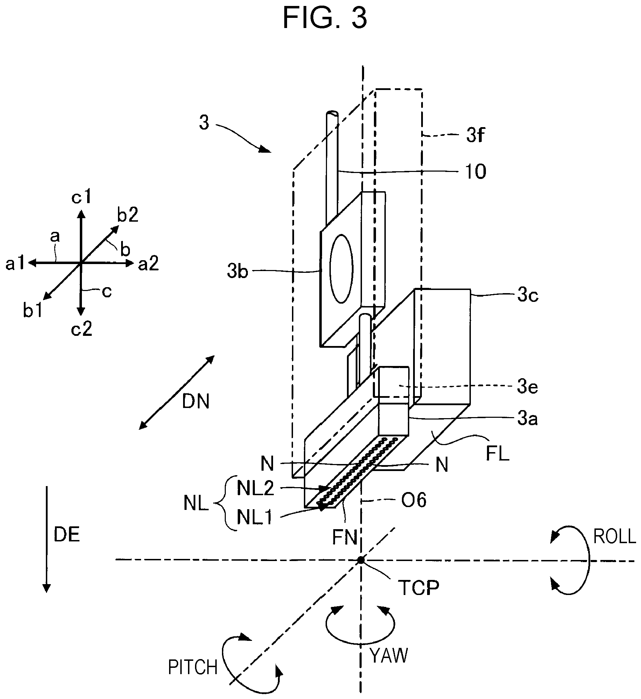

The head unit 3 is an assembly having a head 3a that ejects an ink, which is an example of a "liquid", toward the workpiece W. In the present embodiment, the head unit 3 has not only the head 3a but also a pressure regulating valve 3b and an energy emitting portion 3c. Details of the head unit 3 will be described below with reference to FIG. 3.

The ink is not particularly limited, and includes, for example, an aqueous ink in which a coloring material such as a dye or a pigment is dissolved in an aqueous solvent, a curable ink using a curable resin such as an ultraviolet curable type, a solvent-based ink in which a coloring material such as a dye or a pigment is dissolved in an organic solvent, and the like. Among the inks, the curable ink is preferably used. The curable ink is not particularly limited, and may have, for example, any of a thermosetting type, a photocurable type, a radiation curable type, an electron beam curable type, and the like, and a photocurable type such as an ultraviolet curable type is preferable. The ink is not limited to the solution, and may be an ink in which a coloring material or the like is dispersed as a dispersant in a dispersion medium. Further, the ink is not limited to an ink containing a coloring material, and may be, for example, an ink containing conductive particles such as metal particles for forming wiring or the like as a dispersant, a clear ink, or a treatment liquid for surface treatment of the workpiece W.

Each of the piping portion 10 and a wiring portion (not illustrated) is coupled to the head unit 3. The piping portion 10 is a piping or a piping group that supplies the ink from an ink tank (not illustrated) to the head unit 3. The wiring portion is a wiring or a wiring group for supplying an electric signal for driving the head 3a. The routing of the wiring portion may have the same manner as or different from the routing of the piping portion 10.

The controller 5 is a robot controller that controls the drive of the robot 2. The computer 7 is a computer such as a desktop type or a notebook type in which a program is installed, and controls the drive of the head unit 3. Hereinafter, an electrical configuration of the three-dimensional object printing apparatus 1 will be described with reference to FIG. 2, including a detailed description of the controller 5 and computer 7.

### 1-2. Electrical Configuration of Three-dimensional Object Printing Apparatus

FIG. 2 is a block diagram illustrating an electrical configuration of the three-dimensional object printing apparatus 1 according to the first embodiment. In FIG. 2, among components of the three-dimensional object printing apparatus 1, electrical components are illustrated. As illustrated in FIG. 2, in addition to the components illustrated in FIG. 1 described above, the three-dimensional object printing apparatus 1 includes a control module 6 that is communicably connected to the controller 5 and a computer 7 that is communicably connected to the controller 5 and the control module 6. Here, a control portion 8 is configured with the controller 5, the control module 6, and the computer 7.

Each electrical component illustrated in FIG. 2 may be appropriately divided, a part thereof may be included in another component, or may be integrally formed with the other component. For example, a part or the entirety of the functions of the controller 5 or the control module 6 may be realized by the computer 7, or may be realized by another external apparatus such as a personal computer (PC) coupled to the controller 5 via a network such as a local area network (LAN) or the Internet.

The controller 5 has a function of controlling the drive of the robot 2 and a function of generating a signal D3 for synchronizing an ink ejection operation of the head unit 3 with the operation of the robot 2.

The controller 5 has a storage circuit 5a and a processing circuit 5b.

The storage circuit 5a stores various programs to be executed by the processing circuit 5b and various types of data to be processed by the processing circuit 5b. The storage circuit 5a includes, for example, one or both semiconductor memories of a volatile memory such as a random access memory (RAM) and a non-volatile memory such as a read only memory (ROM), an electrically erasable programmable read-only memory (EEPROM) or a programmable ROM (PROM). A part or all of the storage circuit 5a may be included in the processing circuit 5b.

Printing path information Da is recorded in the storage circuit 5a.

The printing path information Da is used for controlling the operation of the robot 2, and is information corresponding to a position and a posture of the head 3a in a path along which the head 3a is to be moved during execution of the printing operation, and includes a position information component indicating a position of a tool center point TCP and a posture information component indicating a posture of the tool center point TCP. Since the tool center point TCP is a virtual point of which a positional relationship with the head 3a is fixed, the printing path information Da includes information indicating a change in relative position of the head 3a with respect to the workpiece W during execution of the printing operation, and information indicating a change in relative posture of the head 3a with respect to the workpiece W during the execution of the printing operation. That is, the printing path information Da includes information indicating a printing path RU, which will be described below. Although the details will be described below, in the present embodiment, the printing path RU indicated by the printing path information Da is set on a surface of the workpiece W, and the tool center point TCP is disposed in a space to be separated from the head 3a at a predetermined interval, so that in an actual printing operation, the head 3a passes through a path separated by the predetermined interval from the surface of the workpiece W set as the printing path RU indicated by the printing path information Da. In the following, from the viewpoint of avoiding redundant expression, the fact that the tool center point TCP disposed in the space spaced apart from the head 3a at the predetermined interval changes the posture while passing through the printing path RU indicated by the printing path information Da simply means that the head 3a is moved along the printing path RU, in some cases. The printing path information Da is represented by using, for example, coordinate values of a workpiece coordinate system based on the position of the workpiece W, the base coordinate system, or the world coordinate system. The printing path information Da is generated by a processing circuit 7b, and is input from the processing circuit 7b to the storage circuit 5a. When the printing path information Da is represented by using a coordinate value of the workpiece coordinate system, the printing path information Da is used for controlling the operation of the robot 2 after conversion from the coordinate value of the workpiece coordinate system to a coordinate value of the base coordinate system or the world coordinate system.

The processing circuit 5b controls an operation of the arm drive mechanism 2a of the robot 2 based on the printing path information Da, and generates the signal D3. The processing circuit 5b includes, for example, one or more processors such as a central processing unit (CPU). The processing circuit 5b may include a programmable logic device such as a field-programmable gate array (FPGA), instead of the CPU or in addition to the CPU.

Here, the arm drive mechanism 2a is an aggregation of the drive mechanisms of the joints 230_1 to 230_6 described above, and includes a motor for driving the joint of the robot 2 and an encoder that measures a rotation angle of the joint of the robot 2, for each joint 230.

The processing circuit 5b performs an inverse kinematics calculation, which is an arithmetic operation for converting the printing path information Da into the operation amount such as a rotation angle and a rotation speed of each joint 230 of the robot 2. The processing circuit 5b outputs a control signal Sk1 based on an output D1 from each encoder of the arm drive mechanism 2a so that the operation amount such as the actual rotation angle and the rotation speed of each joint 230 becomes the arithmetic operation result described above based on the printing path information Da. The control signal Sk1 is a signal for controlling a drive of the motor of the arm drive mechanism 2a. Here, the control signal Sk1 is corrected by the processing circuit 5b based on an output from a distance sensor (not illustrated), as needed.

Further, the processing circuit 5b generates the signal D3, based on the output D1 from at least one of a plurality of encoders included in the arm drive mechanism 2a. For example, the processing circuit 5b generates a trigger signal including a pulse at a timing at which the output D1 from one of the plurality of encoders becomes a predetermined value as the signal D3.

The control module 6 is a circuit that controls an ink ejection operation in the head unit 3 based on the signal D3 output from the controller 5 and print data Img from the computer 7. The control module 6 includes a timing signal generation circuit 6a, a power supply circuit 6b, a control circuit 6c, and a drive signal generation circuit 6d.

The timing signal generation circuit 6a generates a timing signal PTS based on the signal D3. The timing signal generation circuit 6a is configured with, for example, a timer that starts generation of the timing signal PTS by using detection of the signal D3 as a trigger.

The power supply circuit 6b receives power from a commercial power supply (not illustrated) to generate various predetermined potentials. The various generated potentials are appropriately supplied to each portion of the control module 6 and the head unit 3. For example, the power supply circuit 6b generates a power supply potential VHV and an offset potential VBS. The offset potential VBS is supplied to the head unit 3. Further, the power supply potential VHV is supplied to the drive signal generation circuit 6d.

The control circuit 6c generates a control signal SI, a waveform designation signal dCom, a latch signal LAT, a clock signal CLK, and a change signal CNG, based on the timing signal PTS. These signals are synchronized with the timing signal PTS. Among these signals, the waveform designation signal dCom is input to the drive signal generation circuit 6d, and the other signals are input to the switch circuit 3e of the head unit 3.

The control signal SI is a digital signal for designating an operation state of a drive element included in the head 3a of the head unit 3. Specifically, the control signal SI is a signal for designating whether or not to supply a drive signal Com, which will be described below, to the drive element based on the print data lmg. With this designation, for example, whether or not to eject inks from a nozzle corresponding to the drive element is designated, and the amount of ink ejected from the nozzle is designated. The waveform designation signal dCom is a digital signal for defining a waveform of the drive signal Com. The latch signal LAT and the change signal CNG are signals for defining an ejection timing of the ink from the nozzle, in combination with the control signal SI, by defining a drive timing of the drive element. The clock signal CLK is a reference clock signal synchronized with the timing signal PTS.

The above control circuit 6c includes, for example, one or more processors such as a CPU. The control circuit 6c may include a programmable logic device such as an FPGA instead of the CPU or in addition to the CPU.

The drive signal generation circuit 6d is a circuit that generates the drive signal Com for driving each drive element included in the head 3a of the head unit 3. Specifically, the drive signal generation circuit 6d includes, for example, a DA conversion circuit and an amplifier circuit. In the drive signal generation circuit 6d, the DA conversion circuit converts the waveform designation signal dCom from the control circuit 6c from a digital signal to an analog signal, and the amplifier circuit uses the power supply potential VHV from the power supply circuit 6b to amplify the analog signal and generate the drive signal Com. Here, among waveforms included in the drive signal Com, a signal of a waveform actually supplied to the drive element is a drive pulse PD. The drive pulse PD is supplied from the drive signal generation circuit 6d to the drive element, via the switch circuit 3e of the head unit 3.

Here, the switch circuit 3e is a circuit including a switching element that switches whether or not to supply at least a part of the waveform included in the drive signal Com as the drive pulse PD based on the control signal SI.

The computer 7 has a function of generating the printing path information Da, a function of supplying information such as the printing path information Da to the controller 5, and a function of supplying information such as the print data Img to the control module 6. In addition to these functions, the computer 7 of the present embodiment has a function of controlling a drive of the energy emitting portion 3c.

The computer 7 has a storage circuit 7a and the processing circuit 7b. In addition, although not illustrated, the computer 7 has an input device that accepts an operation from a user, such as a keyboard or a mouse. The computer 7 may have a display device that displays information necessary for generating the printing path information Da, such as a liquid crystal panel.

The storage circuit 7a stores various programs to be executed by the processing circuit 7b and various types of data to be processed by the processing circuit 7b. The storage circuit 7a includes, for example, one or both semiconductor memories of a volatile memory such as a RAM and a non-volatile memory such as a ROM, an EEPROM, or a PROM. A part or all of the storage circuit 7a may be included in the processing circuit 7b.

The storage circuit 7a records the printing path information Da, candidate path information Db, workpiece information Dc, printing region information Dd, ejection condition information De, valid nozzle information Df, head information Dg, the print data Img, and a program PR.

The candidate path information Db is used for generating the printing path information Da, and is information indicating a plurality of candidate paths that may serve as the printing path information Da in a virtual space SV, which is a virtual space simulating an actual space and is information corresponding to a position and a posture of the head 3a in a path along which the head 3a is to be moved, and includes a position information component indicating a position of the tool center point TCP and a posture information component indicating a posture of the tool center point TCP. That is, the candidate path information Db includes information indicating a change in relative position of the head 3a with respect to the workpiece W and information indicating a change in relative posture of the head 3a with respect to the workpiece W. The candidate path information Da is represented by using, for example, the coordinate values of the workpiece coordinate system, the base coordinate system, or the world coordinate system. The candidate path information Db is generated by the processing circuit 7b, and is input from the processing circuit 7b to the storage circuit 5a. Here, at least one candidate path from the plurality of candidate paths indicated by the candidate path information Db is selected as a printing path indicated by the printing path information Da.

The workpiece information Dc is data representing a shape of at least a part of the workpiece W. Specifically, the workpiece information Dc is three-dimensional data such as a standard triangulated language (STL) format representing the shape of the workpiece W by a plurality of polygons. The workpiece information Dc includes coordinate information that is information on coordinates of each vertex of the polygon, and vector information that is information on a normal vector indicating the front and back of a polygon surface. The workpiece information Dc is obtained by performing conversion processing, as needed, on computer-aided design (CAD) data indicating a three-dimensional shape of the workpiece W. The workpiece information Dc may be represented by using coordinate values of the workpiece coordinate system, or may be represented by point group data using coordinate values of the base coordinate system or the world coordinate system. Further, the workpiece information Dc may be represented by an equation or the like, and a format of the workpiece information Dc can be appropriately converted as needed.

The printing region information Dd is information indicating a printing region that is a region as a printing target on the surface WF of the workpiece W, and includes information indicating a shape and a size of the printing region. In the present embodiment, the printing region information Dd includes three-dimensional image information indicating an ideal printing image to be printed in the printing region in addition to the information indicating the shape and size of the printing region. The three-dimensional image information includes, for example, color data or gradation data for each pixel. The three-dimensional image information is obtained by attaching two-dimensional image information, which is plane image data, to a three-dimensional object as a texture. The printing region information Dd is represented by using, for example, the coordinate values of the workpiece coordinate system, the base coordinate system, or the world coordinate system. The three-dimensional image information may not be included in the printing region information Dd, and may be information separate from the printing region information Dd. Further, the printing region information Dd may be included in the workpiece information Dc.

The ejection condition information De is information on a positional relationship between a plurality of nozzles of the head 3a and a printing region RP indicated by the printing region information Dd for each path of the plurality of candidate paths indicated by the candidate path information Db. In the present embodiment, the ejection condition information De includes ejection distance information De1 and angle information De2. The ejection distance information De1 is information on a distance between a printing region indicated by the printing region information Dd and the plurality of nozzles of the head 3a. The angle information De2 is information on an angle formed by the printing region indicated by the printing region information Dd and a flight direction of an ink ejected from the plurality of nozzles of the head 3a.

The valid nozzle information Df is information indicating a nozzle group used for ejecting inks among the plurality of nozzles of the head 3a for each path of the plurality of candidate paths indicated by the candidate path information Db. The valid nozzle information Df is generated by the processing circuit 7b based on one or both of positions of the ejection distance information De1 and the angle information De2.

The head information Dg is information on the head 3a. Specifically, the head information Dg is information for representing the plurality of nozzles of the head 3a as virtual objects in the virtual space SV, and includes information indicating the number, a distance, and an ejection direction of the plurality of nozzles, the position of the tool center point TCP, which will be described below, and the like.

The print data Img is information indicating an image to be printed on the workpiece W for each path of a printing path indicated by the printing path information Da.

The program PR is a program for generating the printing path information Da.

The processing circuit 7b realizes each of the functions described above by executing a program such as the program PR. The processing circuit 7b includes, for example, one or more processors such as a CPU. The processing circuit 7b may include a programmable logic device such as an FPGA instead of the CPU or in addition to the CPU.

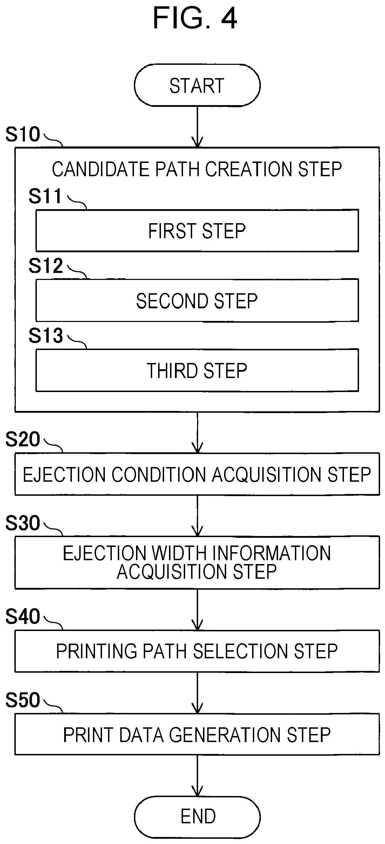

The processing circuit 7b realizes various functions for a printing operation setting method, which will be described below, including generation of the printing path information Da and the like, by executing the program PR. Details of the printing operation setting method will be described below with reference to FIGS. 4 to 15.

As described above, by controlling the drive of the robot 2 based on the printing path information Da and controlling the drive of the head 3a based on the print data Img and the signal D3, the printing operation is performed. In the printing operation, while the robot 2 changes the position and the posture of the head 3a based on the printing path information Da, the head 3a ejects inks from the head 3a toward the workpiece W at an appropriate timing based on the print data Img and the signal D3. Thus, an image based on the print data Img is formed at the workpiece W.

The control portion 8 configured with the controller 5, the control module 6, and the computer 7 above controls each operation of the head 3a and the robot 2. Specifically, as will be described in detail below, the control portion 8 sets a recording ratio of mutually duplicated printing operations for a printing region, based on one or both of an ejection distance and a landing angle of an ink on the surface of the workpiece W. The "recording ratio" is a ratio of a recording pixel by one printing operation among two printing operations to a recording pixel by the other printing operation. Here, information on the recording ratio of each printing operation is included in the print data Img.

### 1-3. Configuration of Head Unit

FIG. 3 is a perspective view illustrating a schematic configuration of the head unit 3. In the following description, for convenience, an a-axis, a b-axis, and a c-axis that intersect with each other will be appropriately used. Further, in the following description, one direction along the a-axis is an a1 direction, and a direction opposite to the a1 direction is an a2 direction. In the same manner, directions opposite to each other along the b-axis are a b1 direction and a b2 direction. Further, directions opposite to each other along the c-axis are a c1 direction and a c2 direction.

Here, the a-axis, the b-axis, and the c-axis correspond to coordinate axes of a tool coordinate system set in the head unit 3, and relative positions and relationships of postures with the world coordinate system or the robot coordinate system described above are changed by the operation of the robot 2 described above. In the example illustrated in FIG. 3, the c-axis is an axis parallel with the rotation axis O6 described above. The a-axis, the b-axis, and the c-axis are typically orthogonal to each other without being limited thereto, and may intersect at an angle within a range of 80° or more and 100° or less, for example. The tool coordinate system and the base coordinate system or the robot coordinate system are associated with each other by calibration.

In the following, the a-axis may be referred to as a "roll axis", the b-axis may be referred to as a "pitch axis", and the c-axis may be referred to as a "yaw axis". In addition, a rotation around the a-axis may be referred to as "roll", a rotation around the b-axis may be referred to as "pitch", and a rotation around the c-axis may be referred to as "yaw".

The tool coordinate system is set with reference to the tool center point TCP. Therefore, the position and the posture of the head 3a are defined with reference to the tool center point TCP. In the present embodiment, as illustrated in FIG. 3, the tool center point TCP is disposed in a space separated by a predetermined gap in an ejection direction DE of inks from a center of a nozzle array NL of the head 3a in the b-axis direction. The position of the tool center point TCP is not limited to the example illustrated in FIG. 3, and may be, for example, a center of a nozzle surface FN.

As described above, the head unit 3 has the head 3a, the pressure regulating valve 3b, and the energy emitting portion 3c. The head 3a, the pressure regulating valve 3b, and the energy emitting portion 3c are supported by a support body 3f illustrated by a two-dot chain line in FIG. 3. In the example illustrated in FIG. 3, the number of each of the head 3a and the pressure regulating valve 3b included in the head unit 3 is one. Meanwhile, the number is not limited to the example illustrated in FIG. 3, and may be equal to or more than 2. Further, an installation position of the pressure regulating valve 3b is not limited to the arm 226, and may be, for example, another arm or the like, or may be a fixed position with respect to the base portion 210.

The support body 3f is made of, for example, a metal material or the like, and is a substantially rigid body. In FIG. 3, the support body 3f has a planar box shape, and a shape of the support body 3f is not particularly limited and is any shape.

The above support body 3f is mounted to the arm 226 described above. Therefore, the head 3a, the pressure regulating valve 3b, and the energy emitting portion 3c are collectively supported on the arm 226 by the support body 3f. Therefore, each relative position of the head 3a, the pressure regulating valve 3b, and the energy emitting portion 3c with respect to the arm 226 is fixed. In the example illustrated in FIG. 3, the pressure regulating valve 3b is disposed at a position in the c1 direction with the head 3a. The energy emitting portion 3c is disposed at a position in the a2 direction with respect to the head 3a.

The head 3a has the nozzle surface FN and a plurality of nozzles N that are opened on the nozzle surface FN. The nozzle surface FN is a nozzle surface through which the nozzle N is opened, and is made of, for example, a material such as silicon (Si) or metal, or when another member is disposed as a component of the head unit 3 on a plane extending from the plate surface, the nozzle surface FN is a surface configured with a plate surface of a nozzle plate and a surface of the other member. Here, the nozzle plate is a member in which the plurality of nozzles N are formed at a plate-shaped member made of silicon, metal, or the like. The other member is, for example, a fixing plate and a cover head. The fixing plate is a member provided around the nozzle plate for the purpose of fixing or protecting the nozzle plate. The cover head is a member provided for the purpose of protecting the head 3a, and has a portion disposed around the nozzle plate. The fixing plate and the cover head may not be provided depending on the configuration of the head 3a. Further, positions of surfaces of the fixing plate and the cover head in a direction along the c-axis are different from a plate surface of the nozzle plate by a maximum of 0.8 mm, in some cases. In the example illustrated in FIG. 3, the nozzle surface FN is configured with only a plate surface of one nozzle plate. Meanwhile, the nozzle surface FN may have a plurality of nozzle plates, in this case, the nozzle surface FN is defined as a surface including a plurality of nozzle plates. In the example illustrated in FIG. 3, a normal direction of the nozzle surface FN, that is, the ejection direction DE of the inks from the nozzle N is the c2 direction. Strictly, there is a case where the ejection direction DE and the c2 direction are not parallel with each other due to inertia, an influence of an air flow or the like by the operation of the robot 2, and in the present embodiment, such an error is not considered.

The plurality of nozzles N are divided into a first nozzle array NL1 and a second nozzle array NL2 aligned apart from each other in a direction along the a-axis. Each of the first nozzle array NL1 and the second nozzle array NL2 is a set of the plurality of nozzles N linearly arrayed in a nozzle array direction DN which is a direction along the b-axis. Here, elements related to each of the nozzles N of the first nozzle array NL1 and elements related to each of the nozzles N of the second nozzle array NL2 in the head 3a are configured to be substantially symmetrical with each other in a direction along the a-axis.

Meanwhile, positions of the plurality of nozzles N in the first nozzle array NL1 and the plurality of nozzles N in the second nozzle array NL2 in the direction along the b-axis may or may not coincide with each other. The elements related to each nozzle N of one of the first nozzle array NL1 and the second nozzle array NL2 may be omitted. In the following, a configuration in which the positions of the plurality of nozzles N in the first nozzle array NL1 and the plurality of nozzles N in the second nozzle array NL2 in the direction along the b-axis coincide with each other will be described.

In the following, the entire first nozzle array NL1 and the entire second nozzle array NL2 may be referred to as a nozzle array NL. The nozzle array NL includes the first nozzle array NL1 and the second nozzle array NL2.

Although not illustrated, the head 3a has a piezoelectric element which is a drive element and a cavity for accommodating inks, for each nozzle N. Here, the piezoelectric element ejects an ink in the ejection direction DE from a nozzle corresponding to the cavity, by changing a pressure of the cavity corresponding to the piezoelectric element. Such a head 3a can be obtained, for example, by bonding a plurality of substrates such as a silicon substrate appropriately processed by etching or the like with an adhesive or the like. As the drive element for ejecting the ink from the nozzle, a heater that heats the ink in the cavity may be used instead of the piezoelectric element.

Ink is supplied to the above head 3a from an ink tank (not illustrated) via the piping portion 10. Here, the piping portion 10 is coupled to the head 3a via the pressure regulating valve 3b.

The pressure regulating valve 3b is a valve mechanism that is opened and closed according to a pressure of the ink in the head 3a. By this opening and closing, the pressure of the ink in the head 3a is maintained at a negative pressure within a predetermined range even when a positional relationship between the head 3a and the ink tank (not illustrated) described above is changed. Therefore, a meniscus of the ink formed at the nozzle N of the head 3a is stabilized. As a result, it is possible to prevent air bubbles from entering the nozzle N, and the ink from overflowing from the nozzle N. Further, the ink from the pressure regulating valve 3b is appropriately distributed to a plurality of locations of the head 3a via a branch flow path (not illustrated). Here, the ink from the ink tank (not illustrated) is supplied to the pressure regulating valve 3b at a predetermined pressure by a pump or the like.

The energy emitting portion 3c emits energy such as light, heat, an electron beam, or radiation for curing or solidifying the ink on the workpiece W. For example, when the ink has ultraviolet curability, the energy emitting portion 3c is configured with a light emitting element such as a light emitting diode (LED) that emits ultraviolet rays. Further, the energy emitting portion 3c may appropriately have an optical component such as a lens for adjusting an emitting direction or an emitting range of the energy.

### 1-4. Printing Operation Setting Method

FIG. 4 is a diagram illustrating a flow of a printing operation setting method of the three-dimensional object printing apparatus 1 according to the first embodiment. As illustrated in FIG. 4, the printing operation setting method includes a candidate path creation step S10, an ejection condition acquisition step S20, an ejection width information acquisition step S30, a printing path selection step S40, and a print data generation step S50 in this order. In the present embodiment, these steps are executed by the processing circuit 7b of the computer 7. Hereinafter, an overview of each step will be described.

In the candidate path creation step S10, a plurality of candidate paths indicating a change in relative position of the workpiece W and the head 3a are created in a virtual space. The candidate path information Db is generated as information indicating the creation result.

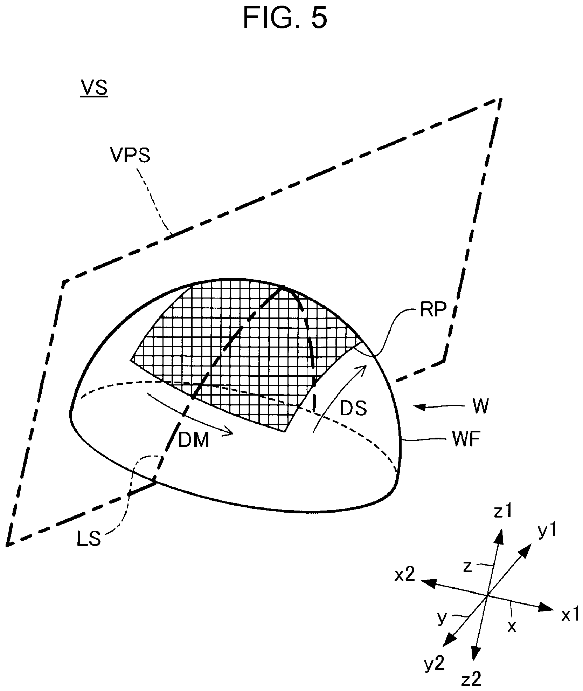

In the present embodiment, the candidate path creation step S10 includes a first step S11, a second step S12, and a third step S13 in this order. In the first step S11, a sub-scanning reference line along a surface of the workpiece W is set in the virtual space. In the second step S12, a plurality of reference points including a first reference point and a second reference point on the sub-scanning reference line are set in the virtual space. In the third step S13, a printing path which is a movement path of the head 3a in a printing operation is set in the virtual space. In the present embodiment, the printing path set in the third step S13 is a candidate path which is a temporary printing path, and may include a path other than the printing path used when an actual printing operation is executed. Details of the candidate path creation step S10 will be described below with reference to FIGS. 5 to 10.

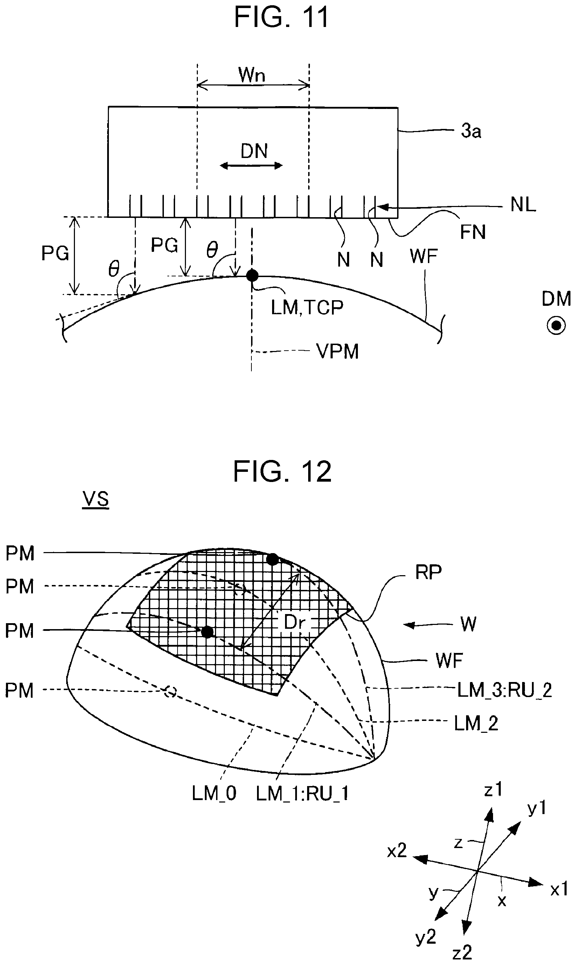

In the ejection condition acquisition step S20, the ejection condition information De on a positional relationship between the plurality of nozzles N and a printing region of the workpiece W for each path of the plurality of candidate paths indicated by the candidate path information Db in the virtual space is acquired. Details of the ejection condition acquisition step S20 will be described with reference to FIG. 11.

In the ejection width information acquisition step S30, the valid nozzle information Df based on one or both of the ejection distance information De1 and the angle information De2 for each path of the plurality of candidate paths indicated by the candidate path information Db is acquired.

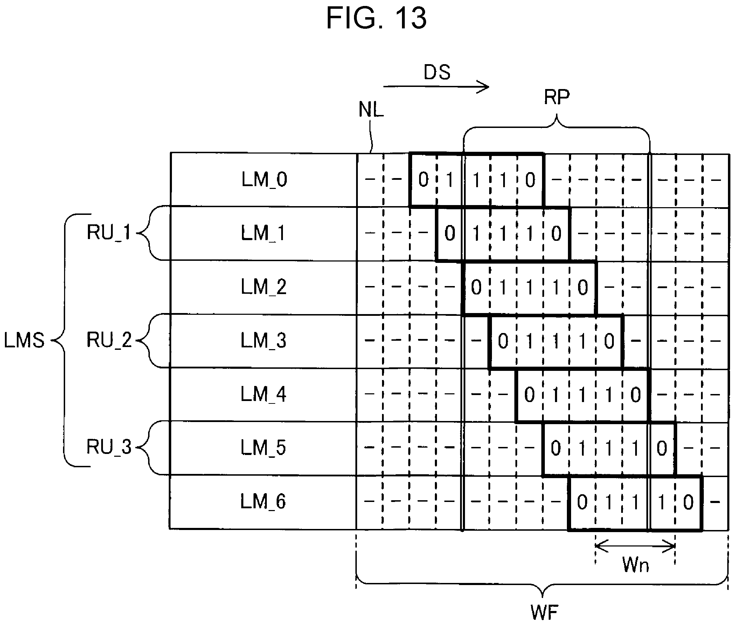

In the printing path selection step S40, based on the ejection condition information De, at least one candidate path from the plurality of candidate paths indicated by the candidate path information Db is selected as a printing path to be used when the printing operation is executed. The printing path information Da is generated as information indicating the selection result. At this time, a position information component and a posture information component included in the selected candidate path information Db are taken over as a position information component and a posture information component included in the printing path information Da. In the printing path selection step S40 of the present embodiment, a printing path is selected based on the valid nozzle information Df and the printing region information Dd in addition to the ejection condition information De. Details of the ejection width information acquisition step S30 will be described below with reference to FIGS. 12 and 13.

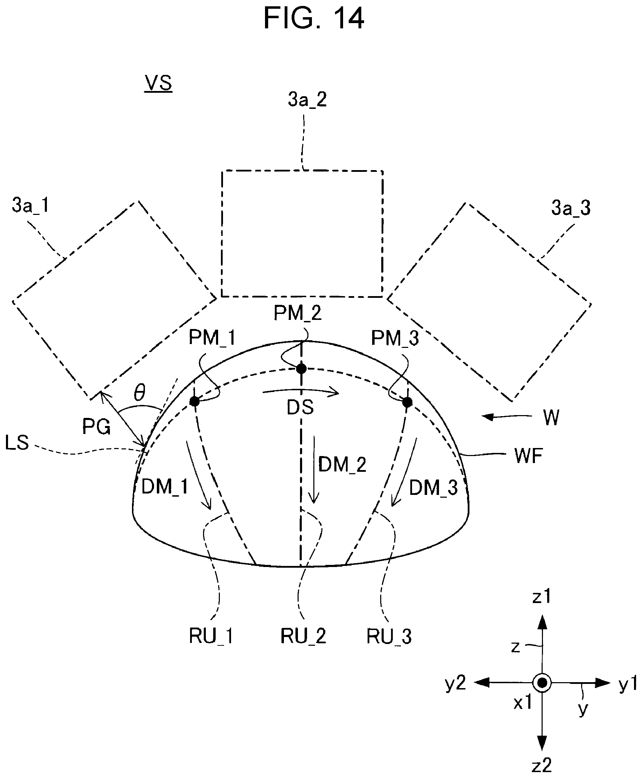

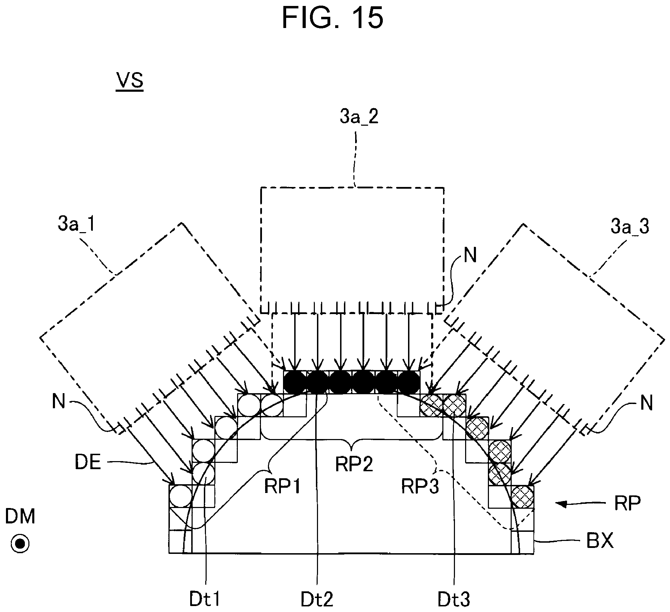

In the print data generation step S50, the print data Img is generated based on the printing path information Da, the printing region information Dd, and the head information Dg. Details of the print data generation step S50 will be described below with reference to FIGS. 14 and 15.

### 1-5. Candidate Path Creation Step

FIG. 5 is a diagram describing the first step S11 of the candidate path creation step S10. In FIG. 5, the workpiece W in the virtual space SV is illustrated. In the virtual space SV, a coordinate system having mutually intersecting x-axis, y-axis, and z-axis as coordinate axes is set. Here, the x-axis corresponds to the X-axis, one direction along the x-axis is an x1 direction, and a direction opposite to the x1 direction is an x2 direction. The y-axis corresponds to the Y-axis, and directions opposite to each other along the y-axis are a y1 direction and a y2 direction. The z-axis corresponds to the Z-axis, and directions opposite to each other along the z-axis are a z1 direction and a z2 direction. In addition, the x-axis, the y-axis, and the z-axis are typically orthogonal to each other. Meanwhile, without being limited to this, all of these need only intersect with each other at an angle within a range of 80° or more and 100° or less.

As illustrated in FIG. 5, in the first step S11, a sub-scanning reference line LS along the surface of the workpiece W is set in the virtual space SV. In the following, a direction along the sub-scanning reference line LS may be referred to as a sub-scanning direction DS. More specifically, the sub-scanning direction DS is a direction parallel to a virtual sub-scanning plane VPS, which will be described below, and is a direction parallel to a tangent line to the surface of the workpiece W at any point on the sub-scanning reference line LS. In the example illustrated in FIG. 5, the sub-scanning direction DS is a direction along the y-axis when viewed in a direction along the z-axis.

More specifically, in the first step S11, first, the workpiece W is disposed in the virtual space VS based on the workpiece information Dc, and the printing region RP is set based on the printing region information Dd. Subsequently, in the first step S11, the virtual sub-scanning plane VPS is set to intersect with the printing region RP. Thereafter, in the first step S11, the sub-scanning reference line LS is set based on intersection points of the virtual sub-scanning plane VPS, which is a virtual plane in the virtual space SV, and the surface of the workpiece W. Here, the sub-scanning reference line LS is an intersection line between the virtual sub-scanning plane VPS and the surface of the workpiece W or a line segment along the intersection line, and is represented by using a coordinate value of the coordinate system set in the virtual space SV. The printing region RP is a region as a printing target on the surface of the workpiece W.

The sub-scanning reference line LS passes through the printing region RP. In the example illustrated in FIG. 5, a center of the sub-scanning reference line LS in the printing region RP is at a position closer to a center of the printing region RP than an end portion of the printing region RP. That is, the sub-scanning reference line LS is set to pass through the printing region RP at a position closer to the center of the printing region RP than the end of the printing region RP in a main scanning direction DM, which will be described below, intersecting with the sub-scanning direction DS. The main scanning direction DM is a direction along a candidate path LM or the printing path RU, which will be described below. More specifically, the main scanning direction DM is a direction parallel to a virtual main scanning plane VPM, which will be described below, and is parallel to a tangent line to the surface of the workpiece W at any point on the candidate path LM or the printing path RU.

Here, a length along the sub-scanning direction DS of the end portion of the printing region RP in the main scanning direction DM may be less than a length along the sub-scanning direction DS of the center of the printing region RP in the main scanning direction DM. Even in such a case, since the center of the sub-scanning reference line LS in the printing region RP is at a position closer to the center of the printing region RP than the end portion of the printing region RP, the candidate path LM and the printing path RU, which will be described below, are easily and appropriately set. From this viewpoint, in this case, it is preferable that the sub-scanning reference line LS passes through the longest portion of a width of the printing region RP along the sub-scanning direction DS in the first step S11.

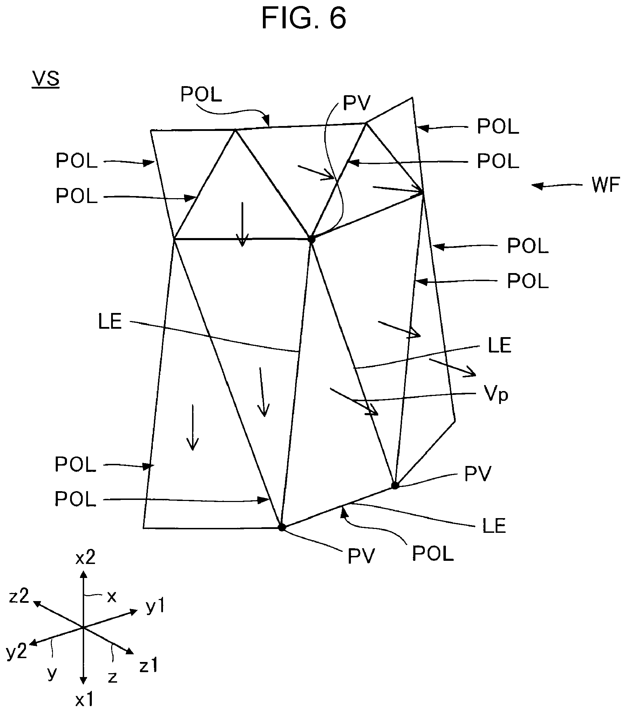

FIG. 6 is a diagram describing details of the surface of the workpiece W in the virtual space VS. In the first step S11, first, the workpiece information Dc is acquired. This acquisition is performed by the processing circuit 7b reading the workpiece information Dc from the storage circuit 7a. After the acquisition, the surface WF of the workpiece W is disposed in the virtual space VS. In FIG. 6, a part of the surface WF of the workpiece W indicated by the workpiece information Dc is representatively illustrated. Although not illustrated in FIG. 6, in the first step S11, the printing region information Dd is acquired along with the acquisition of the workpiece information Dc, and the printing region RP based on the printing region information Dd is set in the virtual space VS.

In the virtual space SV, the surface WF is configured with a plurality of polygons POL. In the example illustrated in FIG. 6, each polygon POL forms a triangle having three sides LE and three vertices PV. Here, each side LE is shared by the two polygons POL. The two polygons POL sharing one side LE are adjacent to each other with the one side LE as a boundary. In addition, each vertex PV is shared by the three or more polygons POL. The three or more polygons POL sharing one vertex PV are in contact with each other with the one vertex PV as a contact point. A normal vector Vp of each polygon POL is obtained by vector information included in the workpiece information Dc. A shape of each polygon POL is not limited to a triangle, and may be another polygon such as a quadrangle.

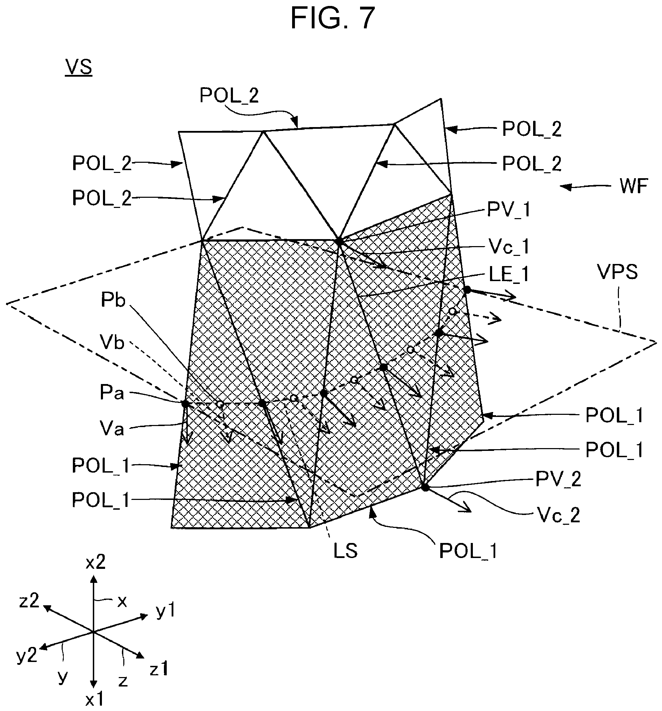

FIG. 7 is a diagram describing details of the sub-scanning reference line LS. In the first step S11, after the surface WF is disposed as described above, a virtual sub-scanning plane VPS is designated in the virtual space VS. The virtual sub-scanning plane VPS crosses the surface WF. The virtual sub-scanning plane VPS and the surface WF intersect with each other at a sub-scanning reference line LS as an intersection line of the virtual sub-scanning plane VPS and the surface WF.

The designation of the virtual sub-scanning plane VPS is executed by the processing circuit 7b based on a designation from the user. For example, the user performs an input on the computer 7 to perform the designation. For example, one or both of a position and a posture of the virtual sub-scanning plane VPS in the virtual space VS are set by an input using an input device of the computer 7. The designation may be automatically set according to a preset reference based on a shape of the printing region RP.

It is preferable that the virtual sub-scanning plane VPS is designated to be parallel as much as possible to a normal line of the intersecting polygon POL (an intersecting polygon POL_1 which will be described below). For example, as illustrated in FIG. 7, when there are five intersecting polygons POL, a total value, an average value, or the like of differences between an angle formed by each polygon POL and the virtual sub-scanning plane VPS, and 90° is designated to be the minimum.

In the first step S11, after the designation of the virtual sub-scanning plane VPS as described above, among the plurality of polygons POL, a plurality of intersecting polygons POL_1, which are polygons POL intersecting with the virtual sub-scanning plane VPS, are specified in the virtual space VS. Since the virtual sub-scanning plane VPS crosses the surface WF as described above, the plurality of polygons POL constituting the surface WF are divided the plurality of intersecting polygons POL_1 that intersect with the virtual sub-scanning plane VPS and a plurality of polygons POL_2 that do not intersect with the virtual sub-scanning plane VPS. In FIG. 7, for convenience of description, the intersecting polygons POL_1 are displayed in a shaded manner.

In the first step S11, a position of the sub-scanning reference line LS in the virtual space VS is set based on the plurality of intersecting polygons POL_1. Specifically, in the first step S11, the position of the sub-scanning reference line LS is set based on a plurality of intersection points Pa of the sides LE of the plurality of intersecting polygons POL_1 and the virtual sub-scanning plane VPS.

In the example illustrated in FIG. 7, an interpolation point Pb is interpolated between the plurality of intersection points Pa. A plurality of points including the plurality of intersection points Pa and a plurality of interpolation points Pb are set as the position of the sub-scanning reference line LS. In this manner, the position of the sub-scanning reference line LS is set based on the plurality of intersection points Pa and the plurality of interpolation points Pb. In the example illustrated in FIG. 7, the number of interpolation points Pb arranged between two adjacent intersection points Pa is one, and the number may be two or more. The plurality of points including the plurality of intersection points Pa and the plurality of interpolation points Pb may not be provided at equal intervals.

The position of the sub-scanning reference line LS may be based on at least one of the plurality of intersection points Pa and the plurality of interpolation points Pb, and may not coincide with positions of the plurality of intersection points Pa and the plurality of interpolation points Pb. For example, the position of the sub-scanning reference line LS may be a position at which the positions of the plurality of intersection points Pa and the plurality of interpolation points Pb are moved in a direction in which the positions are uniformly separated from the intersecting polygon POL_1.

In the example illustrated in FIG. 7, the interpolation point Pb is disposed on the intersection line between the virtual sub-scanning plane VPS and the surface WF. The plurality of points including the plurality of intersection points Pa and the plurality of interpolation points Pb are typically disposed at equal intervals as much as possible. Here, it is preferable that the interpolation point Pb is disposed on a smooth curve passing through the plurality of intersection points Pa. Such a curve is represented by, for example, a spline function. After sorting the plurality of intersection points Pa into a plurality of valid intersection points and at least one invalid intersection point, the position of the sub-scanning reference line LS may be set by interpolation between the plurality of valid intersection points.

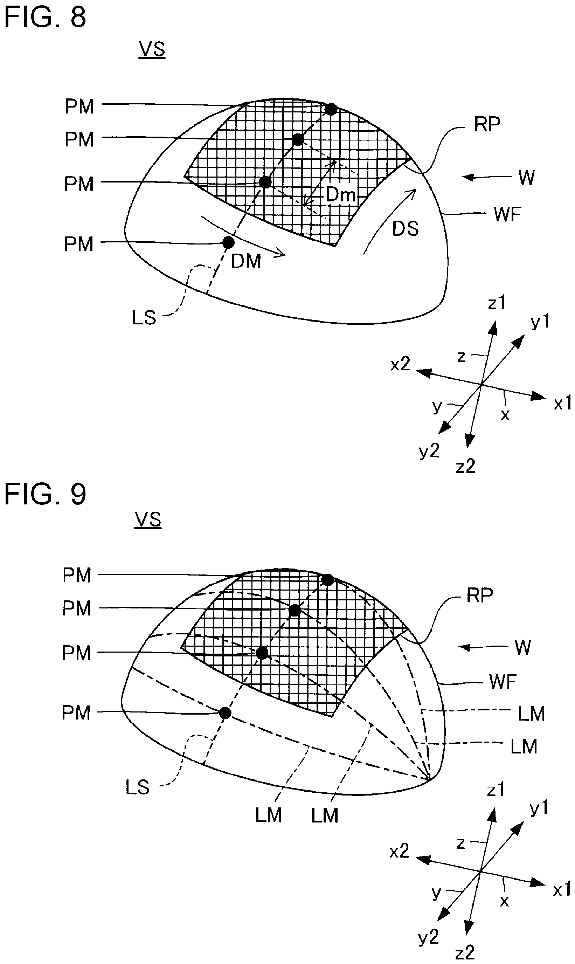

FIG. 8 is a diagram describing the second step S12 of the candidate path creation step S10. As illustrated in FIG. 8, in the second step S12, a plurality of reference points PM are set on the sub-scanning reference line LS in the virtual space VS. This setting is performed, for example, by selecting the intersection point Pa or the interpolation point Pb described above as the reference point PM, or is performed by using a function such as a spline function representing the sub-scanning reference line LS and obtaining a plurality of appropriate points on the sub-scanning reference line LS as the reference point PM, based on the intersection point Pa or the interpolation point Pb.

Here, among the plurality of reference points PM, any one reference point PM is an example of a "first reference point", any one reference point PM adjacent to the first reference point is a "second reference point", and any one reference point PM adjacent to the second reference point separately from the first reference point is an example of a "third reference point". Therefore, among the plurality of reference points PM, the reference point PM corresponding to the "first reference point", the reference point PM corresponding to the "second reference point", and the reference point PM corresponding to the "third reference point" are arranged on the sub-scanning reference line LS in this order. The number of reference points PM may be two or more, and may be any number without being limited to the example illustrated in FIG. 8. When the number of the reference points PM is two, one reference point PM of the two reference points PM is the "first reference point", and the other reference point PM is the "second reference point".

A distance Dm along the sub-scanning reference line LS between the two reference points PM adjacent to each other among the plurality of reference points PM is equal to or less than a width of the nozzle array NL in a direction along the b-axis over an entire region of the sub-scanning reference line LS, and more preferably equal to or less than 1/2 of the width of the nozzle array NL. In the example illustrated in FIG. 8, the plurality of reference points PM are arranged on the sub-scanning reference line LS at equal intervals. Therefore, the distance Dm along the sub-scanning reference line LS between the reference point PM corresponding to the "first reference point" and the reference point PM corresponding to the "second reference point" is equal to the distance Dm along the sub-scanning reference line LS between the reference point PM corresponding to the "second reference point" and the reference point PM corresponding to the "third reference point". In addition, the intervals of the plurality of reference points PM along the sub-scanning reference line LS may not be equal.

FIG. 9 is a diagram describing the third step S13 of the candidate path creation step S10. As illustrated in FIG. 9, in the third step S13, a plurality of candidate paths LM for each reference point PM are set in the virtual space VS. Each of the plurality of candidate paths LM passes through the corresponding reference point PM, and intersects with the sub-scanning reference line LS. Here, among the plurality of candidate paths LM, the candidate path LM passing through the reference point PM corresponding to the "first reference point" is an example of a "first printing path", the candidate path LM passing through the reference point PM corresponding to the "second reference point" is an example of a "second printing path", and the candidate path LM passing through the reference point PM corresponding to the "third reference point" is an example of a "third printing path".

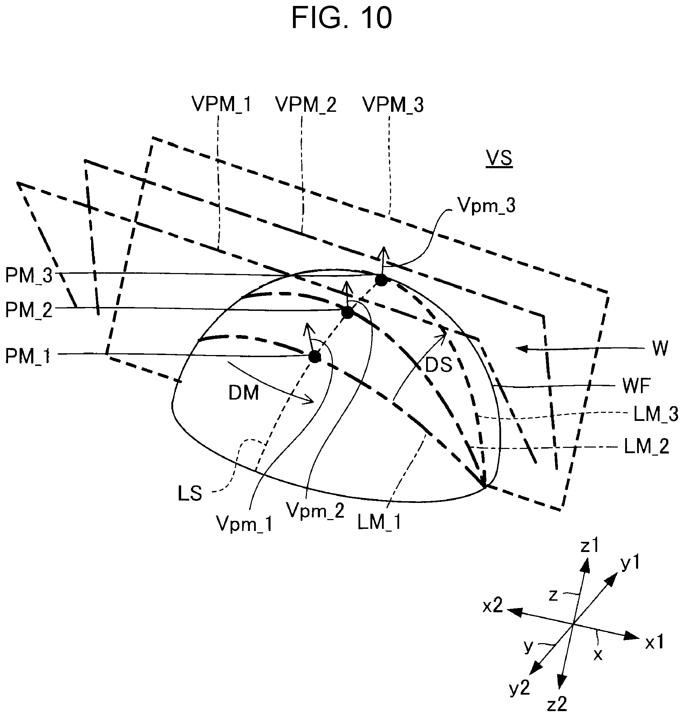

FIG. 10 is a diagram illustrating a method of setting the candidate path LM. In FIG. 10, for convenience of description, among the plurality of reference points PM, a reference point PM_1 which is the reference point PM corresponding to the "first reference point", a reference point PM_2 which is the reference point PM corresponding to the "second reference point", and a reference point PM_3 which is the reference point PM corresponding to the "third reference point" are representatively illustrated.

Here, among the plurality of candidate paths LM, the candidate path LM corresponding to the "first printing path" is a candidate path LM_1, the candidate path LM corresponding to the "second printing path" is a candidate path LM_2, and the candidate path LM corresponding to the "third printing path" is a candidate path LM_3.

The candidate path LM_1 is set in the virtual space VS based on intersection points of a first virtual main scanning plane VPM_1, which is a virtual plane passing through the reference point PM_1, and the surface of the workpiece W. In the same manner, the candidate path LM_2 is set in the virtual space VS based on intersection points of a second virtual main scanning plane VPM_2, which is a virtual plane passing through the reference point PM_2, and the surface of the workpiece W. In addition, the candidate path LM_3 is set in the virtual space VS based on intersection points of the third virtual main scanning plane VPM_3, which is a virtual plane passing through the reference point PM_3, and the surface of the workpiece W. In the following, each of the first virtual main scanning plane VPM_1, the second virtual main scanning plane VPM_2, and the third virtual main scanning plane VPM_3 may be referred to as the virtual main scanning plane VPM.

The intersection point between the virtual main scanning plane VPM and the surface of the workpiece W is set in the same manner as the intersection point Pa and the interpolation point Pb between the virtual sub-scanning plane VPS and the surface WF described above as illustrated in FIG. 7. Further, the virtual sub-scanning plane VPS and the virtual main scanning plane VPM are orthogonal to each other when viewed in a direction parallel to both the virtual sub-scanning plane VPS and the virtual main scanning plane VPM.

Here, the virtual main scanning plane VPM is a plane that roughly represents an ideal ink ejection direction by the head 3a and an ideal movement direction of the head 3a. That is, during execution of the printing operation when the candidate path LM is used as the printing path RU which will be described below, the head 3a ejects inks substantially parallel to the virtual main scanning plane VPM, and the head 3a moves in a direction substantially parallel to the virtual main scanning plane VPM. In this manner, the virtual main scanning plane VPM is a plane that serves as a reference for defining the position and the posture of the head 3a during the printing.

In the present embodiment, in the third step S13, the virtual main scanning plane VPM is parallel to a normal line of the surface WF at the reference point PM. In the present embodiment, since the position of the tool center point TCP in the nozzle array direction DN is set to the center of the nozzle array NL, by making the virtual main scanning plane VPM parallel to the normal direction of the surface WF at the reference point PM, it is possible to easily set the printing path RU with a narrow ejection distance PG, which will be described below, for a relatively large number of nozzles N.

Here, for example, when the reference point PM is set by selecting the intersection point Pa or the interpolation point Pb as the reference point PM in the second step S12, the normal line of the surface WF at the reference point PM is parallel to the vector Va or the vector Vb indicated in FIG. 7 described above. That is, in this case, normal vector Vpm_1 to Vpm_3 of the surface WF at the reference points PM_1 to PM_3 are the vector Va or the vector Vb illustrated in FIG. 7.

The vector Va is a normal vector of the surface WF at the intersection point Pa, and is preferably defined based on the normal vector Vp of the plurality of polygons POL that share both ends of the side LE including the corresponding intersection point Pa. A specific description will be given with reference to FIG. 7. When one intersection point of the plurality of intersection points Pa is set as a first intersection point, the vector Va indicating a direction along a normal line corresponding to the first intersection point is preferably defined based on a first vertex vector Vc_1 and a second vertex vector Vc_2. Here, when among the sides LE of the plurality of intersecting polygons POL_1, the side LE including the first intersection point is set as a first side LE_1, one end of the first side LE_1 is set as the first vertex PV_1, and the other end of the first side LE_1 is set as a second vertex PV_2, the first vertex vector Vc_1 is a normal vector corresponding to the first vertex PV_1 and the second vertex vector Vc_2 is a normal vector corresponding to the second vertex PV_2. It is preferable that these vertex vectors are obtained in advance based on the vector information Db2 included in the workpiece information Dc.

The vector Vb is a normal vector of the surface WF at the interpolation point Pb, and is preferably defined to be an average of the two adjacent vectors Va.

A position indicated by the candidate path LM, that is, the position information component included in the candidate path information Db may be based on a plurality of intersection points between the virtual main scanning plane VPM and the surface of the workpiece W, and may not coincide with positions of the intersection points of the virtual main scanning plane VPM and the surface of the workpiece W. For example, in order to separate the head 3a and the workpiece W from each other and prevent mutual collision during execution of printing, a position of the candidate path LM may be a position at which the plurality of intersection points of the virtual main scanning plane VPM and the surface of the workpiece W are moved in a direction of being uniformly separated from the surface of the workpiece W. In this case, unlike the present embodiment, the tool center point TCP of the robot 2 is disposed at a position or the like on the nozzle surface FN of the head 3a.

Meanwhile, in the present embodiment, the position of the candidate path LM includes a plurality of points at which the virtual main scanning plane VPM and the surface of the workpiece W intersect with each other, and is disposed on the surface WF. On the other hand, as illustrated in FIG. 11, the tool center point TCP is set at a position apart from the nozzle surface FN by a predetermined distance. Therefore, the head 3a and the workpiece W can be separated from each other to prevent mutual collision when printing is executed. In addition, since the tool center point TCP is set at a center of the nozzle array LN in the b-axis direction, a center of the nozzle array NL of the head 3a is operated substantially along the virtual main scanning plane VPM during the printing operation.

After the position of the candidate path LM is set as described above, in the third step S13, the posture information component included in the candidate path information Db, that is, a posture of a yaw, a roll, and a pitch of the head 3a at each position of the candidate path LM is set. Specifically, in the third step S13, first, based on vector information of the workpiece information Dc, a plurality of intersection point vectors indicating a direction along a normal line corresponding to an intersection point of the side LE of the polygon POL and the virtual main scanning plane VPM are specified. In the third step S13, the posture information component included in the candidate path information Db is set based on the plurality of intersection point vectors. More specifically, in the third step S13, based on the plurality of intersection point vectors and the head information Dg, the processing circuit 7b sets the posture information component of the candidate path information Db such that the ejection direction DE of the head 3a or the c-axis of the head 3a is parallel to the intersection point vector.

Here, in addition to the plurality of intersection point vectors, a plurality of interpolation point vectors indicating a direction along a normal line corresponding to an interpolation point that Interpolates with the intersection points of the side LE of the polygon POL and the virtual main scanning plane VPM are specified. Each of the plurality of interpolation point vectors is defined to be, for example, an average of the two adjacent intersection point vectors.

As described above, the position information component and the posture information component of the candidate path information Db are set. Thereafter, a relative movement direction of the head 3a and the workpiece W along a position indicated by the candidate path information Db is designated. In the present embodiment, a direction approaching the robot 2 is set as the movement direction. A direction approaching the robot 2 may be set as the movement direction.

### 1-6. Ejection Condition Acquisition Step and Ejection Width Information Acquisition Step

FIG. 11 is a diagram describing the ejection condition acquisition step S20 and the ejection width information acquisition step S30. In FIG. 11, the head 3a corresponding to one candidate path LM is representatively illustrated. In FIG. 11, for convenience of description, the head 3a is schematically illustrated.

In the ejection condition acquisition step S20, the ejection condition information De is acquired based on the printing region information Dd, the candidate path information Db, and the head information Dg. This acquisition is performed by calculating various numerical values related to a positional relationship between the plurality of nozzles N and the printing region RP for each path of the plurality of candidate paths LM indicated by the candidate path information Db, in the virtual space VS.

More specifically, in the ejection condition acquisition step S20, first, the printing region RP indicated by the printing region information Dd and the plurality of candidate paths LM indicated by the candidate path information Db are set in the virtual space VS, and then based on the head information Dg, positions and postures of the plurality of nozzles N are set in the virtual space VS such that the tool center point TCP is set on each candidate path LM at the position and the posture indicated by the candidate path information Db. Thereafter, an intersection point of a straight line extending from each nozzle N in an ejection direction of the nozzle N indicated by the head information Dg and the printing region RP is obtained. For each nozzle N, a distance between the intersection point and the nozzle N is obtained as the ejection distance PG. Further, for each nozzle N, an angle formed by a tangent plane of the printing region RP at the intersection point and the ejection direction is obtained as a landing angle θ. From the above, the ejection condition information De indicating the ejection distance PG and the landing angle θ for each nozzle N can be obtained.

In the present embodiment, the ejection condition information De includes the ejection distance information De1 and the angle information De2 as described above. The ejection distance information De1 indicates a distance between the printing region RP and the plurality of nozzles N in the ejection direction DE for each nozzle N. The distance corresponds to the ejection distance PG of an ink from the nozzle N to the printing region RP. The angle information De2 indicates an angle formed by the printing region RP and a flight direction of the ink ejected from the plurality of nozzles N for each nozzle N. The angle corresponds to the landing angle θ of the ink from the nozzle N to the printing region RP.

In the example illustrated in FIG. 11, since the printing region RP has a projecting curve, each of the ejection distance PG and the landing angle θ is different for each nozzle N. Here, when the nozzle N closer to an end portion than a center of the nozzle array NL among the plurality of nozzles N constituting the nozzle array NL is set as a first nozzle and the nozzle N closer to the center of the nozzle array NL than the first nozzle among the plurality of nozzles N is set as a second nozzle, the ejection distance PG between the nozzle N corresponding to the second nozzle and the printing region RP is less than the ejection distance PG between the nozzle N corresponding to the first nozzle and the printing region RP. Further, the landing angle θ, which is an angle formed by a flight direction of an ink ejected from the nozzle N corresponding to the first nozzle and the printing region RP, is closer to 90° than the landing angle θ, which is an angle formed by a flight direction of an ink ejected from the nozzle N corresponding to the second nozzle and the printing region RP.

As described above, since the posture indicated by the candidate path information Db is set such that the ejection direction DE of the head 3a is parallel to the normal line of the surface WF at the reference point PM, and the posture of the head 3a is set by using the tool center point TCP as a reference point, when the printing region RP is curved, among the plurality of nozzles N constituting the nozzle array NL, the ejection distance PG and the landing angle θ of the nozzle N closest to the tool center point TCP are set to be the most ideal. In other words, among the plurality of nozzles N constituting the nozzle array NL, a deviation of the ejection distance PG and the landing angle θ from the ideal condition is increased as the nozzle N is farther from the tool center point TCP. Therefore, as described above, since the second nozzle is closer to the tool center point TCP than the first nozzle, the ejection distance PG and the landing angle θ of the second nozzle are more ideal than the ejection distance PG and the landing angle θ of the first nozzle.

When the ejection distance PG is more than a predetermined distance or the landing angle θ deviates from 90° by a predetermined value or more, landing accuracy of the ink from the nozzle N to the printing region RP deteriorates. Therefore, in the ejection width information acquisition step S30, the valid nozzle information Df is acquired by setting a nozzle group to be used for ejecting inks, among the plurality of nozzles N constituting the nozzle array N L.

The valid nozzle information Df indicates a position of the valid nozzle group to be used for ejecting a liquid and an ejection width Wn which is a width formed by the nozzle group of the nozzles. In the example illustrated in FIG. 11, among the plurality of nozzles N constituting the nozzle array NL, the plurality of nozzles N except two nozzles N at each of both end portions of the nozzle array NL are set as a nozzle group to be used for ejecting inks. In FIG. 11, for convenience of description, eight nozzles are representatively illustrated as the plurality of nozzles N constituting the nozzle array NL, and among the eight nozzles N, the four nozzles N closest to the center of the nozzle array NL are set as a valid nozzle group to be used for ink ejection. At this time, a distance between one end and the other end of the nozzle group to be used for ejection in the b-axis direction or the nozzle array direction DN is the ejection width Wn. The ejection width Wn is determined based on one or both of the ejection distance PG and the landing angle θ, and is not limited to the example illustrated in FIG. 11. For example, since an image quality deteriorates when the ejection distance PG is excessively large, an allowable ejection distance, which is the maximum value of the allowable ejection distance PG, is set. As compared with the ejection condition information De, the nozzles N having the ejection distance PG equal to or less than the allowable ejection distance, are set as the valid nozzle group to be used for ejecting inks.

### 1-7. Printing Path Selection Step

FIG. 12 is a diagram describing the printing path selection step S40. In FIG. 12, as the plurality of candidate paths LM indicated by the candidate path information Db, a candidate path LM_0 is illustrated in addition to the candidate paths LM_1, LM_2, and LM_3 described above. Although not illustrated in FIG. 12, in the present embodiment, in addition to these candidate paths LM, candidate paths LM_4 to LM_6, which will be described below, are used as the candidate paths LM as illustrated in FIG. 13 which will be described below.

As illustrated in FIG. 12, in the printing path selection step S40, at least one candidate path LM among the plurality of candidate paths LM indicated by the candidate path information Db is selected as a printing path to be used when a printing operation is executed. This selection is performed based on the ejection condition information De, the valid nozzle information Df, and the printing region information Dd. In the present embodiment, as illustrated in FIG. 13 to be described below, a case where the candidate paths LM_1, LM_3, and LM_5 are selected as printing paths RU_1 to RU_3 is described. In the following, each of the printing paths RU_1 to RU_3 may be referred to as the printing path RU.

FIG. 13 is a diagram describing selection of a printing path based on the ejection condition information De and the valid nozzle information Df. FIG. 13 illustrates a relationship between the nozzle arrays NL of candidate paths LM_a to LM_g, which are seven candidate paths LM different from each other, and the printing region RP. In FIG. 13, "1" indicates that each of the ejection distance PG and the landing angle θ is within a predetermined range for a nozzle group including a plurality of nozzles N obtained by dividing the plurality of nozzles N of the head 3a into a predetermined range in the nozzle array direction DN, "0" indicates that one or both of the ejection distance PG and the landing angle θ is not within the predetermined range for the nozzle group including the plurality of nozzles N obtained by dividing the plurality of nozzles N of the head 3a into the predetermined range in the nozzle array direction DN, and "-" indicates that the nozzle N of the head 3a does not face the printing region RP.

In the printing path selection step S40, first, a plurality of candidate paths LM passing through the printing region RP are extracted based on the candidate path information Db and the ejection condition information De. In the example illustrated in FIG. 13, the candidate paths LM_0 to LM_6 are extracted.

In addition, in the printing path selection step S40, after extracting the plurality of candidate paths LM, the valid nozzle information Df for each candidate path LM is acquired, and a positional relationship between the printing region RP and the ejection width Wn is obtained. In the example illustrated in FIG. 13, the ejection width Wn is defined by a nozzle group indicated by "1".

Further, in the printing path selection step S40, a combination of the optimum candidate paths LM as the printing paths RU is obtained among the extracted plurality of candidate paths LM based on the positional relationship between the printing region RP and the ejection width Wn, and the combination is selected as the printing path RU. Here, the combination is a combination of the minimum number of candidate paths LM that has an overlapping region OV (to be described below) which is a region in which the ejection widths Wn of the respective candidate paths LM overlap with each other in the sub-scanning direction DS, and can fill the entire region of the printing region RP.

The combination will be specifically described with reference to FIG. 13. The candidate path LM_1 that starts with "1" from a left end in FIG. 13, which is one end of the printing region RP in the sub-scanning direction DS, is selected as the printing path RU_1, and thereafter, the candidate path LM_3 that starts with "1" from the same position in the sub-scanning direction DS as "1" at a right end in FIG 13, which is the other end of the printing path RU_1 in the sub-scanning direction DS, is selected as the printing path RU_2, and the candidate path LM_5 that starts with "1" at the same position in the sub-scanning direction DS as "1" at the right end in FIG. 13, which is one end of the printing path RU_2 in the sub-scanning direction DS, is further selected as the printing path RU_3. By repeating such a calculation until "1" at a right end of the printing path RU in FIG. 13 reaches a right end of the printing region RP in FIG. 13, a path set LMS, which is a combination of the minimum number of candidate paths LM overlapping with each other and configured to fill the entire region of the printing region RP, is obtained.

As described above, in the printing path selection step S40, the path set LMS configured with two or more candidate paths LM corresponding to a range of the printing region RP among the plurality of candidate paths LM indicated by the candidate path information Db is selected as the printing path RU based on the valid nozzle information Df. In the example illustrated in FIG. 13, among the candidate paths LM_0 to LM_6, the candidate paths LM_1, LM_3, and LM_5 constitute the path set LMS.

Here, the three candidate paths LM constituting the path set LMS are examples of a "first path", a "second path", and a "third path", and extend along the main scanning direction DM. For example, the candidate path LM_1 is an example of the "first path". The candidate path LM_3 is an example of the "second path", and is adjacent to the candidate path LM_1 in the sub-scanning direction DS. The candidate path LM_5 is an example of the "third path", and is adjacent to the candidate path LM_3 in the sub-scanning direction DS.

The two or more candidate paths LM constituting the path set LMS may cover the entire range of the printing region RP in the sub-scanning direction, and are not limited to the example illustrated in FIG. 13. Further, the number of the candidate paths LM constituting the path set LMS may be two or less or four or more.

As the number of the candidate paths LM constituting the path set LMS is increased, the number of times of reciprocating movement of the head 3a in the main scanning direction DM is increased. Meanwhile, even when a curvature of the printing region RP becomes large, among the plurality of nozzles N constituting the nozzle array NL, only the nozzles N of which the ejection distance PG and the landing angle θ have little variation can be used, so image quality can be improved. On the other hand, as the number of the candidate paths LM constituting the path set LMS is decreased, the number of times of reciprocating movement of the head 3a in the main scanning direction DM can be reduced, and thus, printing productivity can be improved. Here, when the curvature of the printing region RP is small, the number of the candidate paths LM constituting the path set LMS is reduced, and thus both the improvement of the image quality and the improvement of the productivity can be achieved. Therefore, by setting the number of the candidate paths LM constituting the path set LMS according to the curvature of the printing region RP, it is possible to improve the image quality while reducing the deterioration of the printing productivity.

In this manner, from the viewpoint of improving the productivity of printing, the selection in the printing path selection step S40 is performed such that the number of the candidate paths LM constituting the path set LMS is minimized. Further, from the viewpoint of not causing image omission in the printing region RP, an interval Dr between two candidate paths LM adjacent to each other among the two or more candidate paths LM selected as the printing path RU is less than the ejection width Wn which is a width indicated by the valid nozzle information Df.

### 1-8. Print Data Generation Step

First, before describing the print data generation step S50, the three printing paths RU selected in the printing path selection step S40 described above will be described.

FIG. 14 is a diagram illustrating the printing path RU. In FIG. 14, the three printing paths RU selected in the printing path selection step S40 described above are illustrated as the printing paths RU_1 to RU_3, and for convenience of description, heads 3a_1 to 3a_3, which are the heads 3a corresponding to the respective printing paths RU_1 to RU_3, are illustrated by two-dot chain lines.

In a printing operation, as illustrated in FIG. 14, the head 3a ejects inks toward the surface WF of the workpiece W while the robot 2 moves the head 3a along each printing path RU. Between the printing operations of two printing paths RU adjacent to each other, the robot 2 executes a line feeding operation in which the head 3a is moved in the sub-scanning direction DS.

Here, the printing operation in which the head 3a ejects the inks toward the surface WF of the workpiece W while the robot 2 moves the head 3a along the printing path RU_1 is an example of a "first printing operation". The printing operation in which the head 3a ejects the inks toward the surface WF of the workpiece W while the robot 2 moves the head 3a along the printing path RU_2 is an example of a "second printing operation". The printing operation in which the head 3a ejects the inks toward the surface WF of the workpiece W while the robot 2 moves the head 3a along the printing path RU_3 is an example of a "third printing operation". Here, a relative movement direction of the head 3a with respect to the workpiece W in the first printing operation is the main scanning direction DM_1, the relative movement direction of the head 3a with respect to the workpiece W in the second printing operation is the main scanning direction DM_2, and the relative movement direction of the head 3a with respect to the workpiece W in the third printing operation is the main scanning direction DM_3. In the following, each of the main scanning directions DM_1, DM_2, and DM_3 may be referred to as a main scanning direction DM.

The "first printing operation" may be a printing operation in which the head 3a ejects the inks toward the surface WF of the workpiece W while the robot 2 moves the head 3a along the printing path RU_2. In this case, the printing operation in which the head 3a ejects the inks toward the surface WF of the workpiece W while the robot 2 moves the head 3a along the printing path RU_1 corresponds to the "second printing operation". Further, between the printing operation in which the head 3a ejects the inks toward the surface WF of the workpiece W while the robot 2 moves the head 3a along the printing path RU_2 and the printing operation in which the head 3a ejects the inks toward the surface WF of the workpiece W while the robot 2 moves the head 3a along the printing path RU_3, one printing operation may be regarded as the "first printing operation" and the other printing operation may be regarded as the "second printing operation".

As described above, the printing operation is performed. Here, when each of the first printing operation and the second printing operation is executed, the robot 2 operates such that the ejection distance PG of the ink from the nozzle N corresponding to the second nozzle described above to the printing region RP is less than the ejection distance PG of the ink from the nozzle N corresponding to the first nozzle to the printing region RP. Therefore, a landing error from the nozzle N corresponding to the first nozzle to the printing region RP is more than a landing error from the nozzle N corresponding to the second nozzle to the printing region RP. This is because liquid droplets of the ink ejected from the nozzle N are easily affected by airflow or an error in the ejection direction during the flying since the ejection distance PG of the nozzle N corresponding to the first nozzle is more than the ejection distance PG of the nozzle N corresponding to the second nozzle as described above.

Further, when each of the first printing operation and the second printing operation is executed, the robot 2 operates such that the landing angle θ of the ink from the nozzle N corresponding to the second nozzle described above to the printing region RP is closer to 90° than the landing angle θ of the ink from the nozzle N corresponding to the first nozzle to the printing region RP. Therefore, the landing error from the nozzle N corresponding to the first nozzle to the printing region RP is more than the landing error from the nozzle N corresponding to the second nozzle to the printing region RP. This is because the droplets of the ink ejected from the nozzle N are easily affected by the shape of the workpiece W or an error of the position and the posture of the nozzle N since a difference between the landing angle θ of the nozzle N corresponding to the first nozzle and 90° is more than a difference between the landing angle θ of the nozzle N corresponding to the second nozzle and 90° as described above.

Therefore, in the print data generation step S50, the print data Img in which a recording ratio by each of the first printing operation and the second printing operation is adjusted is created to reduce the deterioration of the image quality due to the landing error as described above.

As described above, the "first nozzle" is the nozzle N closer to the end portion than the center of the nozzle array NL among the plurality of nozzles N constituting the nozzle array NL, and the "second nozzle" is the nozzle N closer to the center of the nozzle array NL than the first nozzle among the plurality of nozzles N.

FIG. 15 is a diagram describing the print data generation step S50. FIG. 15 illustrates a relationship between the plurality of nozzles N of each of the heads 3a_1 to 3a_3 and a landing position of inks on the workpiece W. As described above, the head 3a_1 is the head 3a when the first printing operation is executed, the head 3a_2 is the head 3a when the second printing operation is executed, and the head 3a_3 is the head 3a when the third printing operation is executed.

In the print data generation step S50, the print data Img is generated based on the printing path information Da, the printing region information Dd, and the head information Dg. The printing path information Da, the printing region information Dd, and the head information Dg are used in the print data generation step S50 after being conversion-processed in accordance with coordinate values of a coordinate system of the virtual space VS, as needed.

Specifically, as illustrated in FIG. 15, in the print data generation step S50, as illustrated in FIG. 15, in the virtual space VS, an intersection point of the printing region RP indicated by the printing region information Dd and a virtual line extending from each nozzle N of the head 3a indicated by the head information Dg in the ejection direction DE is obtained for each printing path RU indicated by the printing path information Da, and based on the intersection point, the print data Img for each printing path indicated by the printing path information Da, that is, for each printing operation is generated.

The intersection point corresponds to a landing position of an ink from the head 3a. In the print data generation step S50, color data or gradation data corresponding to the intersection point is extracted from three-dimensional image information included in the printing region information Dd for each printing path RU, the three-dimensional image information is divided for each printing operation of the first printing operation, the second printing operation, and the third printing operation, and the print data Img is generated by performing color-conversion and binarization on the divided three-dimensional image information as necessary.

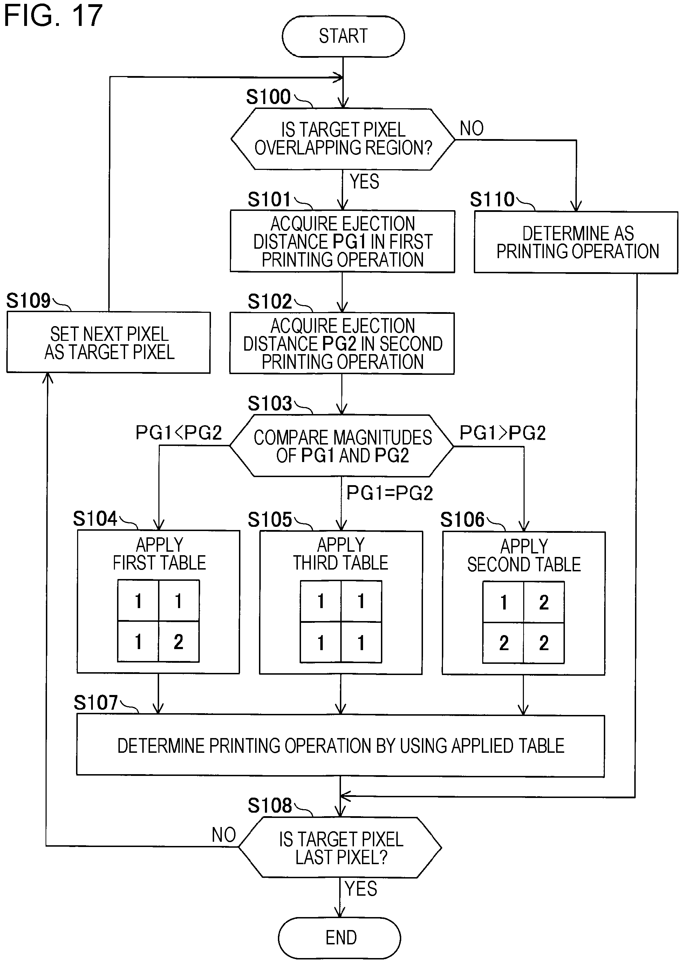

Here, the printing region RP is quantized into a plurality of voxel BX in the virtual space VS as illustrated in FIG. 15. Each voxel BX is a cube, each voxel has a side of the same length, and is continuously disposed three-dimensionally along the printing region RP in the virtual space VS. It is preferable that the length of the side of the voxel BX is appropriately adjusted according to a print resolution. Based on the quantization on the voxel BX and the intersection point corresponding to the landing position of the ink described above, the printing region RP is divided into a first printing region RP1 onto which an ink can be applied during the execution of the first printing operation, a second printing region RP2 onto which the ink can be applied during the execution of the second printing operation, and a third printing region RP3 onto which the ink can be applied during the execution of the third printing operation, in units of the voxel BX. Subsequently, in the print data generation step S50, exclusive processing is performed such that one dot by the ink from one nozzle N belongs to each voxel BX. In this manner, the exclusive processing of the dots is executed in units of the voxel BX. By the exclusive processing between the dots, the three-dimensional image information included in the printing region information Dd is divided into each printing operation of the first printing operation, the second printing operation, and the third printing operation. That is, the print data Img for each printing operation is generated. Details of the exclusive processing of the dots will be described below with reference to FIGS. 17 to 20.

As another example of the unit of the exclusive processing of the dots, pixels in the two-dimensional image described above, which is planar image data, may be used without using the voxel BX. In this case, by performing the exclusive processing such that one dot by the ink from one nozzle N belongs to a pixel which is two-dimensionally arranged, the three-dimensional image information included in the printing region information Dd is divided for each printing operation. In this case, it is necessary that a pixel of the three-dimensional image and a pixel of the two-dimensional image described above are associated with each other.

Further, as still another example of the unit of the exclusive processing of the dots, a particle may be used instead of using the voxel BX. In this case, the printing region RP is represented by a plurality of particles in the virtual space VS. Preferably, each particle is a sphere, and all the particles have the same radius, and are three-dimensionally disposed along the printing region RP. It is preferable that the radius of the particle is appropriately adjusted according to the print resolution. A center of the particle indicates a position at which a dot is disposed, and an intersection point of the printing region RP and a virtual line extending from each nozzle N of the head 3a indicated by the head information Dg in the ejection direction DE in the virtual space VS is obtained, and the center of the particle is disposed based on the intersection point. Further, while another particle is allowed to be disposed at an outside of a radius of a certain particle, a part of the other particle is not allowed to enter inside of the radius of the certain particle, and the other particle is excluded. That is, the surface of the printing region RP is filled with a plurality of particles, and the positions of the individual particles dynamically change according to the shape of the printing region RP and the individual arrangement order. The particles defined in this manner can smoothly represent the curved surface of the printing region RP as compared with the voxel BX described above, and moire can be prevented from occurring in a printing image formed by the three-dimensional object printing apparatus 1.

In addition to the example described above in which the exclusive relationship between the particles is defined by the binary condition such as the inside or the outside of the radius, the exclusive relationship between the particles may be defined by a continuous condition according to the distance from the centers between the particles. More specifically, a continuous repulsive force potential indicated by a Gauss function or the like is set such that a repulsive force that excludes other particles is highest at the center of each particle. A total sum of the repulsive force potentials of the particle to be newly disposed and the peripheral particles already disposed is calculated, and when the total sum is lower than a fixed threshold value, the particle is newly disposed. On the other hand, when the total sum is more than the fixed threshold value, the new arrangement of the particle is suspended. By defining the exclusive relationship between the particles according to the condition in which the concept of the repulsive force potential is introduced in this manner, the curved surface of the printing region RP is further smoothly represented, as compared with the case where the exclusive relationship is defined by the binary condition described above. Thus, it is possible to reduce the occurrence of moire in a printing image formed by the three-dimensional object printing apparatus 1.

In the example illustrated in FIG. 15, the three-dimensional image information included in the printing region information Dd is divided into three-dimensional image information corresponding to a plurality of voxels BX to which a dot Dt1 by an ink from the head 3a_1 belongs, three-dimensional image information corresponding to the plurality of voxels BX to which a dot Dt2 by the ink from the head 3a_2 belongs, and three-dimensional image information corresponding to the plurality of voxels BX to which a dot Dt3 by the ink from the head 3a_3 belongs. In FIG. 15, for convenience of description, the dots Dt1, Dt2, and Dt3 are illustrated in display modes different from each other.

The three-dimensional image information corresponding to the plurality of voxel BX to which the dot Dt1 by the ink from the head 3a_1 belongs is used for the first printing operation. The three-dimensional image information corresponding to the plurality of voxel BX to which the dot Dt2 by the ink from the head 3a_2 belongs is used for the second printing operation. The three-dimensional image information corresponding to the plurality of voxel BX to which the dot Dt3 by the ink from the head 3a_3 belongs is used for the third printing operation.

In addition, in the print data generation step S50, it is checked whether or not the voxel BX to which no dot belongs exists in the printing region RP. In this manner, it is checked whether or not a defect such as chipping occurs in the actual printing image. When the voxel BX to which no dot belongs exists in the printing region RP, the print data generation step S50 is executed again after the printing path RU is added or changed as appropriate.

### 1-9. Printing Region

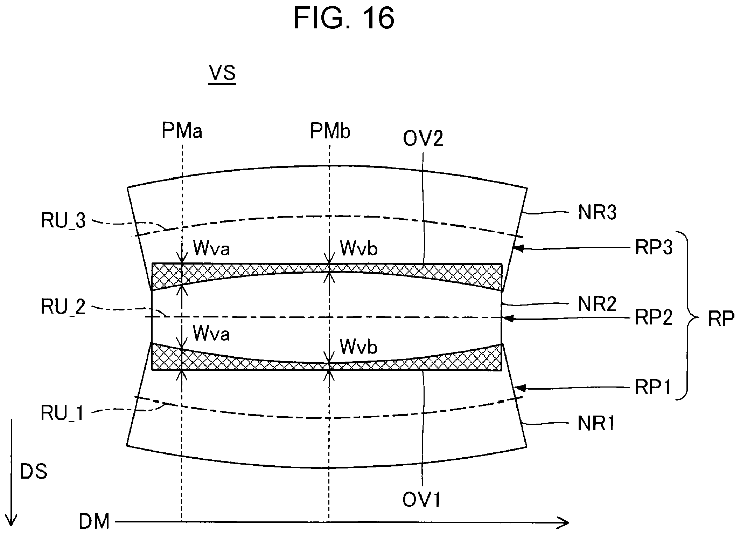

FIG. 16 is a diagram describing the printing region RP according to the first embodiment. In FIG. 16, the maximum printing region RP when a printing operation using the printing paths RU_1 to RU_3 is executed is illustrated by being expanded on an XY plane for easy understanding.

When the first printing operation of moving the head 3a along the printing path RU_1 is executed, an ink is applied onto the first printing region RP1 on the workpiece W. When the second printing operation of moving the head 3a along the printing path RU_2 is executed, the ink is applied onto the second printing region RP2 on the workpiece W. When the third printing operation of moving the head 3a along the printing path RU_3 is executed, the ink is applied onto the third printing region RP3 on the workpiece W.

The first printing region RP1 and the second printing region RP2 overlap each other in an overlapping region OV1. That is, each of the first printing region RP1 and the second printing region RP2 shares the overlapping region OV1. Further, the second printing region RP2 and the third printing region RP3 overlap each other in an overlapping region OV2. That is, each of the second printing region RP2 and the third printing region RP3 shares the overlapping region OV2.

Here, the first printing region RP1 has, in addition to the overlapping region OV1, a non-overlapping region NR1 which is a region different from the overlapping region OV1. The non-overlapping region NR1 is a region within the first printing region RP1, and does not overlap with either the second printing region RP2 or the third printing region RP3. The second printing region RP2 has not only the overlapping regions OV1 and OV2 but also a non-overlapping region NR2 which is a region different from the overlapping regions OV1 and OV2. The non-overlapping region NR2 is a region within the second printing region RP2, and does not overlap with either the first printing region RP1 or the third printing region RP3. The third printing region RP3 has, in addition to the overlapping region OV2, a non-overlapping region NR3 which is a region different from the overlapping region OV2. The non-overlapping region NR3 is a region within the third printing region RP3, and does not overlap with either the first printing region RP1 or the second printing region RP2.

In the present embodiment, when two positions different from each other in the main scanning direction DM are set as a first main scanning position PMa and a second main scanning position PMb, a width Wvb of the overlapping region OV1 at the second main scanning position PMb is less than a width Wva of the overlapping region OV1 at the main scanning position PMa. In the same manner, the width Wvb of the overlapping region OV2 at the second main scanning position PMb is less than the width Wva of the overlapping region OV2 at the first main scanning position PMa. The main scanning direction DM is a direction in which a relative position between the head 3a and the workpiece W is changed when the first printing operation or the second printing operation is executed.

Here, the first main scanning position PMa is a position closer to an end than a center of the overlapping region OV1 or the overlapping region OV2 in the main scanning direction DM. The second main scanning position PMb is a position closer to the center than the end of the overlapping region OV1 or the overlapping region OV2 in the main scanning direction DM.

In the present embodiment, since the surface WF is a true spherical surface, a curvature of a portion corresponding to the first main scanning position PMa on the surface of the workpiece W is equal to a curvature of a portion corresponding to the second main scanning position PMb on the surface of the workpiece W.

In the present embodiment, since the surface WF is a true spherical surface, during the execution of the printing operation, the ink ejection distance PG of an ink from at least one nozzle N among the plurality of nozzles N constituting the nozzle group indicated by the valid nozzle information Df to the printing region RP is not changed. In the same manner, during the execution of the printing operation, the landing angle θ of the ink from at least one nozzle N among the plurality of nozzles N constituting the nozzle group indicated by the valid nozzle information Df to the printing region RP is not changed. Meanwhile, in the same manner as in Modification Example 1 which will be described below, when printing is performed on a surface of the workpiece W having a non-constant curvature depending on a position, that is, when the workpiece W is an elliptical body or the like, during the execution of the printing operation, the ejection distance PG of an ink from at least one nozzle N among the plurality of nozzles N to the printing region RP is changed, and in the same manner, the landing angle θ of the ink from at least one nozzle N among the plurality of nozzles N to the printing region RP is changed. These changes occur due to a relative movement between the head 3a and the workpiece W along the main scanning direction, unlike changes caused by unintended vibration or the like. For example, when focusing on any selected nozzle N, between a first timing in the middle of the relative movement and a second timing in the middle of the relative movement different from the first timing, each of the ejection distance PG and the landing angles θ is different.

Here, an ink ejected from the nozzle N of which the ejection distance PG is equal to or more than a predetermined distance or the landing angle θ deviates from within a predetermined range has a large landing error on the workpiece W.

Therefore, the control portion 8 sets a recording ratio of a recording pixel by the first printing operation and a recording pixel by the second printing operation, based on one or both of the ejection distance PG and the landing angle θ at the time of executing the printing operation. As described above, the "recording ratio" is a ratio of a recording pixel by one printing operation of two printing operations to a recording pixel by the other printing operation, and is set for each position of a plurality of positions different from each other in the main scanning direction DM. The plurality of positions include the first main scanning position PMa and the second main scanning position PMb described above. The setting may be made based on one or both of the ejection distance PG and the landing angle θ when one or both of the first printing operation and the second printing operation are executed.

Hereinafter, a first example and a second example, which are specific examples of a method of setting a recording ratio, will be described.

### First Example of Method of Setting Recording Ratio

FIG. 17 is a flowchart illustrating a first example of a method of setting a recording ratio. Basically, whether to perform the first printing operation or the second printing operation on the overlapping region OV1 for recording is randomly selected. Meanwhile, a probability of the selection is weighted depending on the ejection distance PG for each printing operation.

Specifically, as illustrated in FIG. 17, first, in step S100, the control portion 8 determines whether or not a target pixel in the printing region RP is a pixel in the overlapping region OV. That is, in step S100, the control portion 8 determines whether or not the number of printing operations configured to perform recording on the target pixel is one.

When the target pixel is the pixel in the overlapping region OV (YES in step S100), that is, when the number of printing operations configured to perform recording on the target pixel is not one, the control portion 8 acquires an ejection distance PG1, which is the ejection distance PG in the first printing operation, in step S101, and then acquires the ejection distance PG2, which is the ejection distance PG in the second printing operation, in step S102. An order in step S101 and step S102 may be reversed, or may be performed at the same time.

After step S102, the control portion 8 compares magnitudes of the ejection distance PG1 and the ejection distance PG2 in step S103.

When the ejection distance PG1 is less than the ejection distance PG2, the control portion 8 applies a first table in step S104. When the ejection distance PG1 is equal to the ejection distance PG2, the control portion 8 applies a third table in step S105. When the ejection distance PG1 is more than the ejection distance PG2, the control portion 8 applies a second table in step S106.

Each of the first table, the second table, and the third table is information for selecting one of the first printing operation and the second printing operation at a predetermined probability. In FIG. 17, a table is schematically represented by four elements in two rows and two columns, and in each table, "1" is an element indicating that a dot corresponding to the target pixel is to be formed by an ink droplet ejected in the selected first printing operation, and "2" is an element indicating that the dot corresponding to the target pixel is to be formed by an ink droplet ejected in the selected second printing operation. By randomly selecting one element from the four elements of the table to be applied among these tables, one of the first printing operation and the second printing operation is selected as a printing operation used for recording the target pixel.

Here, in the first table, a probability of selecting the first printing operation is more than a probability of selecting the second printing operation. In the example illustrated in FIG. 17, the number of "1" is three in the first table, while the number of "2" is one, so the probability of selecting the first printing operation is 75%. In the second table, a probability of selecting the second printing operation is more than a probability of selecting the first printing operation. In the example illustrated in FIG. 17, the number of "1" is three in the second table, while the number of "2" is one, so the probability of selecting the second printing operation is 75%. In the third table, a probability of selecting the first printing operation is equal to a probability of selecting the second printing operation. In the example illustrated in FIG. 17, each of the number of "1" and the number of "2" is two in the third table, and the probability of selecting the first printing operation or the second printing operation is 50%.

After step S104, step S105, or step S106 above, the control portion 8 uses one table among the first table, the second table, and the third table applied as described above in step S107 to determine a printing operation by selecting one of the first printing operation and the second printing operation. In this manner, in step S103, a table to be applied is different according to the result of comparing the magnitudes of the ejection distance PG1 and the ejection distance PG2, and thus it is possible to perform weighting on a probability of selecting whether the recording is to be performed by the first printing operation or the recording is to be performed by the second printing operation.

After step S107, the control portion 8 determines whether or not the target pixel is the last pixel in step S108. When the target pixel is not the last pixel (NO in step S108), the control portion 8 uses the target pixel as the next pixel in step S109, and then returns to step S100 described above. On the other hand, when the target pixel is the last pixel (YES in step S108), the control portion 8 ends the process.

Meanwhile, when the target pixel is not a pixel in the overlapping region OV (NO in step S100), that is, when the number of printing operations configured to perform recording on the target pixel is one, the control portion 8 determines, in step S110, one printing operation as a printing operation of recording the target pixel, and proceeds to step S108 described above.

With the above first example, for all the pixels, any of the first printing operation and the second printing operation is set as the printing operation with a probability of weighting to give a priority to a printing operation having the short ejection distance PG as much as possible. FIG. 17 illustrates an aspect of determining the printing operation according to the magnitude of the ejection distance PG. Meanwhile, the table can be applied according to a deviation of the landing angle θ from 90°, and the probability of selecting whether to record with the first printing operation or with the second printing operation can be weighted. In this case, in the same manner, any of the first printing operation and the second printing operation can be set as the printing operation for all the pixels.

### Second Example of Method of Setting Recording Ratio

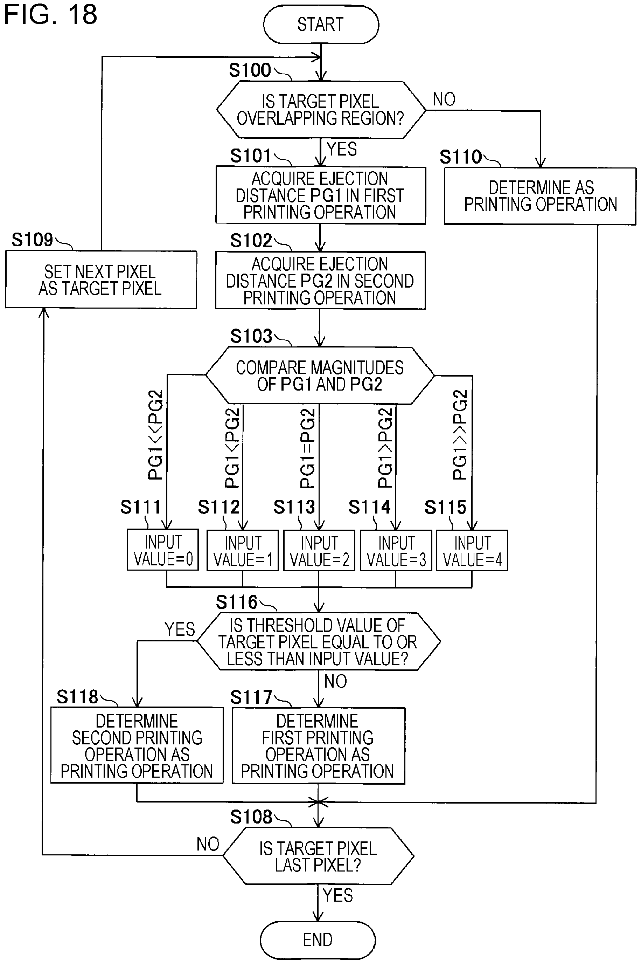

FIG. 18 is a flowchart illustrating a second example of the method of setting the recording ratio. In the second example, whether to record the overlapping region OV1 by the first printing operation or the second printing operation is selected by comparing an input value selected according to the ejection distance PG for each printing operation and a threshold value of a mask MSK which will be described below.

Specifically, the second example illustrated in FIG. 18 is the same as the first example illustrated in FIG. 17 described above, except that steps S111 to S117 are performed instead of steps S104 to S107.

As illustrated in FIG. 18, in the second example, when the ejection distance PG1 is extremely less than the ejection distance PG2 after step S103, the control portion 8 sets an input value to "0 in step S111. After step S103, when the ejection distance PG1 is less than the ejection distance PG2, although not extremely, the control portion 8 sets the input value to "1" in step S112. After step S103, when the ejection distance PG1 is equal to the ejection distance PG2, the control portion 8 sets the input value to "2" in step S113. After step S103, when the ejection distance PG1 is more than the ejection distance PG2, although not extremely, the control portion 8 sets the input value to "3" in step S114. After step S103, when the ejection distance PG1 is extremely more than the ejection distance PG2, the control portion 8 sets the input value to "4" in step S115.

After step S111, step S112, step S113, step S114, or step S115 above, in step S116, the control portion 8 determines whether or not a threshold value of a target pixel in the mask MSK, which will be described below, is equal to or less than the input value.

When the threshold value exceeds the input value (NO in step S116), the control portion 8 determines the first printing operation as the printing operation of recording the target pixel in step S117. On the other hand, when the threshold value is equal to or less than the input value (YES in step S116), the control portion 8 determines the second printing operation as the printing operation for recording the target pixel in step S118.

After the above step S117 or step S118, the control portion 8 proceeds to step S108.

With the above second example, for all the pixels, any of the first printing operation and the second printing operation is set as the printing operation by comparing the input value corresponding to the ejection distance PG and the threshold value of the mask MSK described below to give a priority to a printing operation having the short ejection distance PG as much as possible. FIG. 18 illustrates an aspect of determining the printing operation according to the magnitude of the ejection distance PG, and even when the input value is set according to a magnitude of the landing angle θ, in the same manner, any of the first printing operation and the second printing operation can be set as the printing operation for all the pixels.

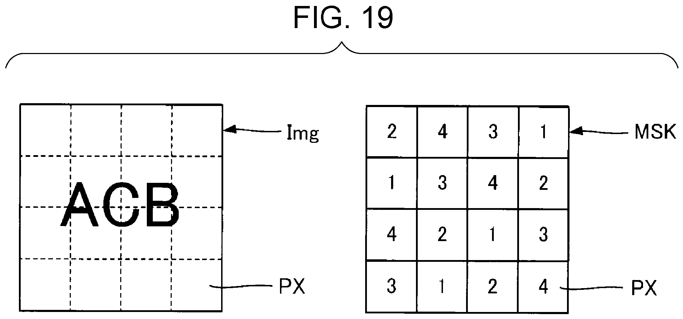

FIG. 19 is a schematic diagram illustrating a relationship between the print data Img and the mask MSK. The mask MSK has a plurality of pixels PX corresponding to the print data lmg. The threshold value in step S116 described above is set for the mask MSK for each pixel PX. In FIG. 19, "1" to "4" indicate the threshold values. The mask MSK is preferably a threshold value matrix having blue noise characteristics. Generally, it is preferable that the same threshold values are distributed and disposed not to be adjacent to each other on the mask. The threshold value, the number of pixels PX, and the like illustrated in FIG. 19 are simply illustrated for convenience of description, and the present embodiment is not limited to this. Further, the mask MSK having characteristics other than the blue noise characteristic, such as a green noise characteristic, may be adopted.

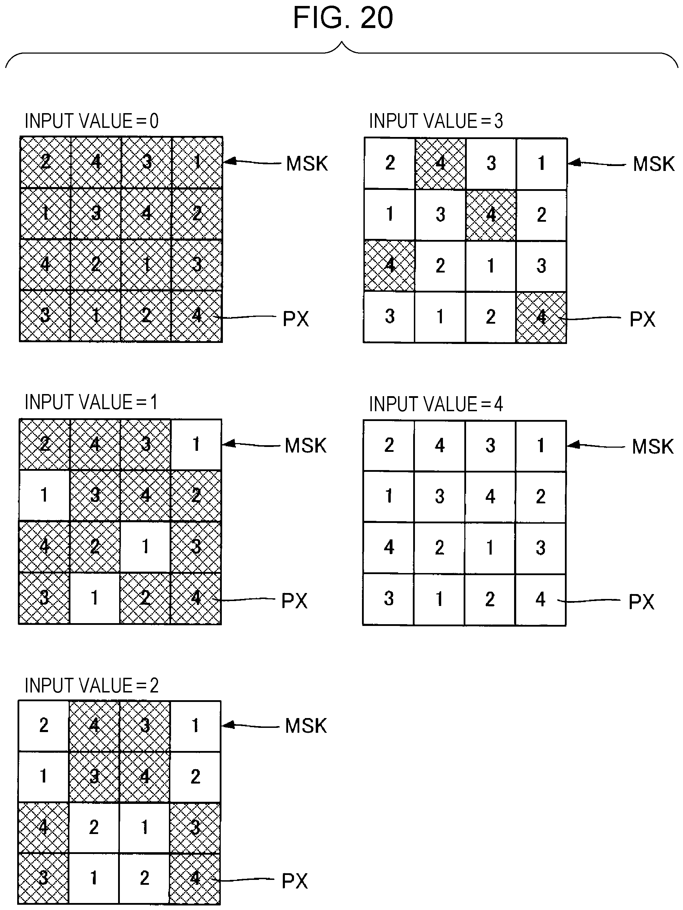

FIG. 20 is a diagram describing a setting of a recording ratio by using the mask MSK illustrated in FIG. 19. In FIG. 20, pixels in which the first printing operation is to be used for recording are displayed in a shaded manner, and pixels in which the second printing operation is to be used for recording are displayed in white.

For example, as illustrated in an upper left part in FIG. 20, when an input value of each pixel is "0", the second printing operation is used for recording all the pixels. As illustrated in a left middle part in FIG. 20, when the input value of each pixel is "1", the first printing operation is used for recording the pixels having a threshold value "1". On the other hand, the second printing operation is used for recording the pixels having the threshold values "2", 3", and "4". As illustrated in a left lower part in FIG. 20, when the input value of each pixel is "2", the first printing operation is used for recording the pixels having the threshold values "1" and "2". On the other hand, the second printing operation is used for recording the pixels having the threshold values "3" and "4". As illustrated in a right upper part in FIG. 20, when the input value of each pixel is "3", the first printing operation is used for recording the pixels having the thresholds values "1", "2", and "3". On the other hand, the second printing operation is used for recording the pixels having the threshold value of "4". As illustrated in a right middle part in FIG. 20, when the input value of each pixel is "4", the first printing operation is used for recording all the pixels. Here, as described above, the input value is determined in step S103 by comparing the magnitudes of the ejection distance PG1 and the ejection distance PG2 with each other. The input value becomes smaller as the ejection distance PG1 is smaller than the ejection distance PG2, and conversely, the input value becomes larger as the ejection distance PG1 is larger than the ejection distance PG2. Therefore, as can be understood from FIG. 20, as the ejection distance PG1 is less than the ejection distance PG2, a probability of recording the target pixel by the first printing operation is increased. On the contrary, as the ejection distance PG1 is more than the ejection distance PG2, a probability of recording the target pixel by the second printing operation is increased.

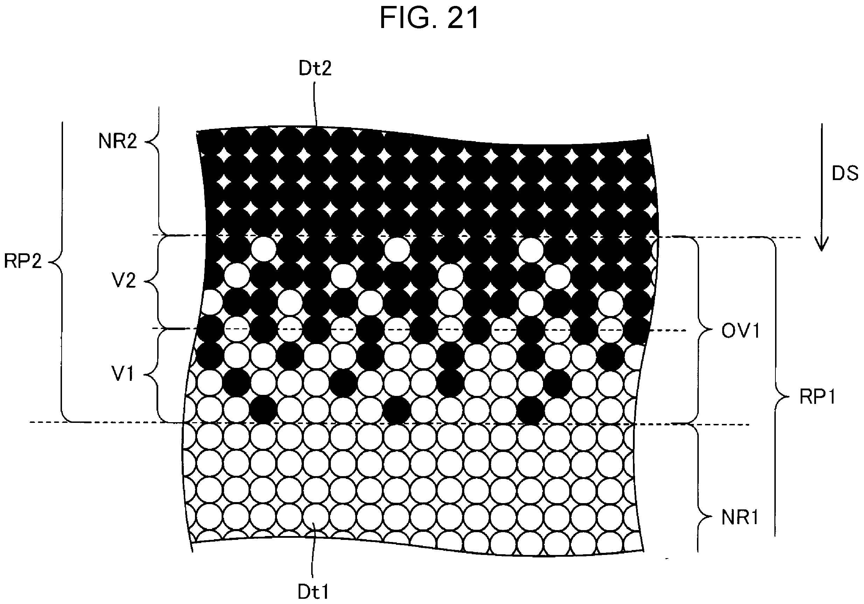

FIG. 21 is a diagram describing a recording ratio in the overlapping region OV1. Hereinafter, the overlapping region OV1 will be described with reference to FIG. 21, and the same is applied to the overlapping region OV2 below. FIG. 21 illustrates an example of arrangement of the dots Dt1 and Dt2 when printing a so-called "solid image", which is a printing image in which ink drops are applied to all pixels corresponding to the printing region RP. In addition, in FIG. 21, for convenience of description, the dots Dt1 and Dt2 are illustrated in display modes different from each other.

In the overlapping region OV1, from one end to the other end in the sub-scanning direction DS, between an existence rate of the dots Dt1 per unit area by the first printing operation and an existence rate of the dots Dt2 per unit area by the second printing operation are illustrated, as one probability is increased, the other is decreased.

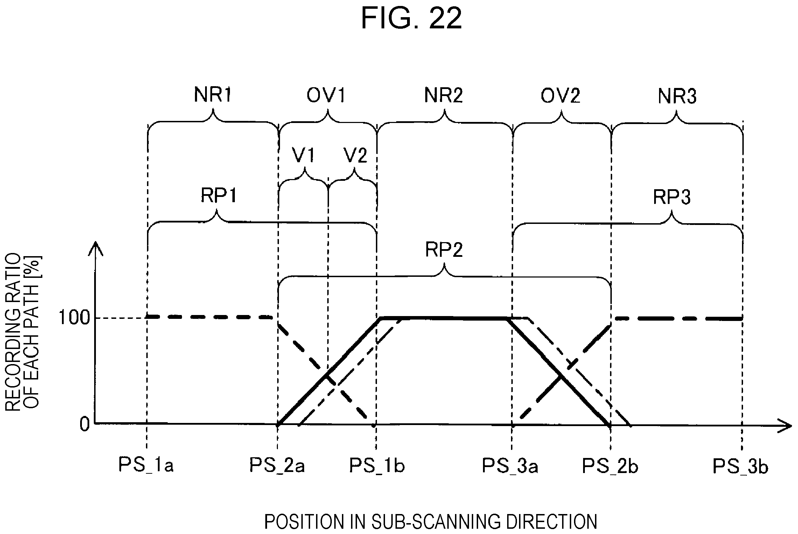

FIG. 22 is a diagram illustrating an example of a relationship between a position in the sub-scanning direction DS and a recording ratio of each path when the recording ratio of each path is changed in the overlapping regions OV1 and OV2. In FIG. 22, a recording ratio by the first printing operation is indicated by a broken line, a recording ratio by the second printing operation is indicated by a solid line, and a recording ratio by the third printing operation is indicated by a dashed-dotted line. In addition, in FIG. 22, a recording ratio by the second printing operation when a position of the head 3a in the sub-scanning direction DS deviates from a regular position in the second printing operation is illustrated by a two-dot chain line.

As illustrated in FIG. 22, the positions of both ends of the first printing region RP1 in the sub-scanning direction DS are positions PS_1a and PS_1b. The positions of both ends of the second printing region RP2 in the sub-scanning direction DS are positions PS_2a and PS_2b. The positions of both ends of the third printing region RP3 in the sub-scanning direction DS are positions PS_3a and PS_3b.

These positions are aligned in the sub-scanning direction DS in order of the position PS_1a, the position PS_2a, the position PS_1b, the position PS_3a, the position PS_2b, and the position PS_3b.

Here, the positions of both ends of the overlapping region OV1 in the sub-scanning direction DS are the positions PS_2a and PS_1b. The positions of both ends of the overlapping region OV2 in the sub-scanning direction DS are the positions PS_3a and PS_2b.

As described above, as the nozzle N is closer to both ends of the nozzle array LN, the ejection distance PG is more and the landing angle θ deviates from 90°. Therefore, among the plurality of nozzles N used for printing the overlapping region OV1 in the first printing operation, the ejection distance PG is more and the landing angle θ deviates from 90° as the nozzle N is closer to the position PS_1b. Further, among the plurality of nozzles N used for printing the overlapping region OV1 in the second printing operation, the ejection distance PG is more and the landing angle θ deviates from 90° as the nozzle N is closer to the position PS_2a.

Therefore, from the viewpoint of reducing an image quality deterioration due to a landing error of the inks on the overlapping region OV1, in the overlapping region OV1, the recording ratio by the first printing operation is gradually decreased from the position PS_2a to the position PS_1b, and the recording ratio by the second printing operation is gradually increased. In other words, in the overlapping region OV1, the recording ratio by the first printing operation is gradually increased and the recording ratio by the second printing operation is gradually decreased from the position PS_1b to the position PS_2a.

In the example illustrated in FIG. 22, in the overlapping region OV1, the recording ratio by the first printing operation is continuously decreased from 100% to 0% from the position PS_2a to the position PS_1b, and the recording ratio by the second printing operation is continuously increased from 0% to 100%. Here, at the same position in the sub-scanning direction DS, a total of the recording ratio by the first printing operation and the recording ratio by the second printing operation is 100%. In the overlapping region OV1, the recording ratio by the first printing operation may be gradually decreased from the position PS_2a to the position PS_1b, and the recording ratio by the second printing operation may be gradually increased.

In the same manner, from the viewpoint of reducing the image quality deterioration due to a landing error of the ink on the overlapping region OV2, in the overlapping region OV2, the recording ratio by the second printing operation is gradually decreased from the position PS_3a to the position PS_2b, and the recording ratio by the third printing operation is gradually increased. In other words, in the overlapping region OV2, the recording ratio by the second printing operation is gradually increased and the recording ratio by the third printing operation is gradually decreased from the position PS_2b to the position PS_3a.

In the example illustrated in FIG. 22, from the position PS_3a to the position PS_2b in the overlapping region OV2, the recording ratio by the second printing operation is continuously decreased from 100% to 0%, and the recording ratio by the third printing operation is continuously increased from 0% to 100%. Here, at the same position in the sub-scanning direction DS, a total of the recording ratio by the second printing operation and the recording ratio by the third printing operation is 100%. In the overlapping region OV2, the recording ratio by the second printing operation may be gradually decreased and the recording ratio by the third printing operation may be gradually increased, from the position PS_3a to the position PS_2b.

As can be understood from the above, when the overlapping region OV1 is divided into the first overlapping region V1 closer to the position PS_2a and the second overlapping region V2 closer to the position PS_1b, the first overlapping region V1 is a region in which the ejection distance PG when the first printing operation is executed is less than the ejection distance PG when the second printing operation is executed in the overlapping region OV1, or a region in which the landing angle θ when the first printing operation is executed is closer to 90° than the landing angle θ when the second printing operation is executed in the overlapping region OV1. In such a first overlapping region V1, a ratio of the recording pixels by the first printing operation is more than a ratio of the recording pixels by the second printing operation.

Further, the second overlapping region V2 is a region in which the ejection distance PG when the second printing operation is executed is less than the ejection distance PG when the first printing operation is executed in the overlapping region OV1, or a region in which the landing angle θ when the second printing operation is executed is closer to 90° than the landing angle θ when the first printing operation is executed in the overlapping region OV1. In such a second overlapping region V2, the ratio of the recording pixels by the second printing operation is more than the ratio of the recording pixels by the first printing operation. The ratio of the recording pixels, that is, the recording ratio, as described above can be relatively, easily, and appropriately realized by applying the first example and the second example, which are specific examples of the method of setting the recording ratio described above. On the other hand, since it is naturally possible to apply other setting methods other than those, the present disclosure is not limited to the specific examples of the first example and the second example.

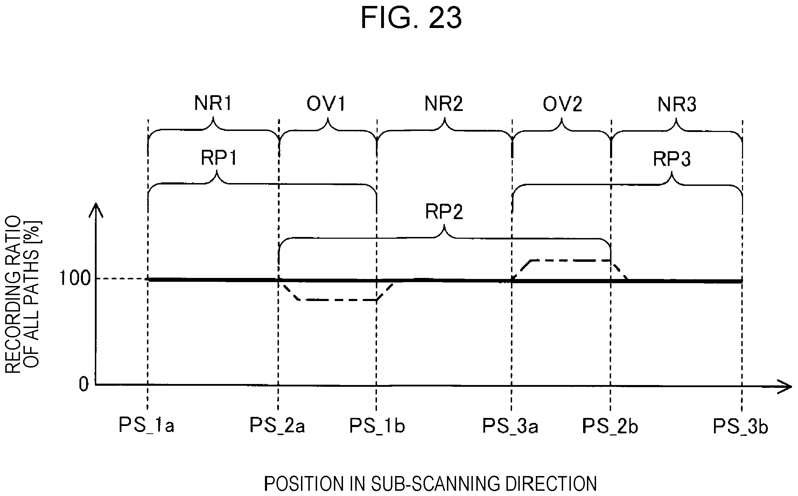

FIG. 23 is a diagram illustrating a relationship between a position in the sub-scanning direction and a recording ratio of all paths when the recording ratio of each path is changed in the overlapping regions OV1 and OV2. In FIG. 23, a total of a recording ratio by the first printing operation, a recording ratio by the second printing operation, and a recording ratio by the third printing operation is illustrated by a solid line. Further, in the same manner as the two-dot chain line in FIG. 22, a total when the position of the head 3a in the sub-scanning direction DS deviates from a regular position in the second printing operation is indicated by two-dot chain lines.

As illustrated in FIG. 23, even when the position of the head 3a in the sub-scanning direction DS deviates from a regular position in the second printing operation, the total of the recording ratio by the first printing operation, the recording ratio by the second printing operation, and the recording ratio by the third printing operation can be prevented from being changed.

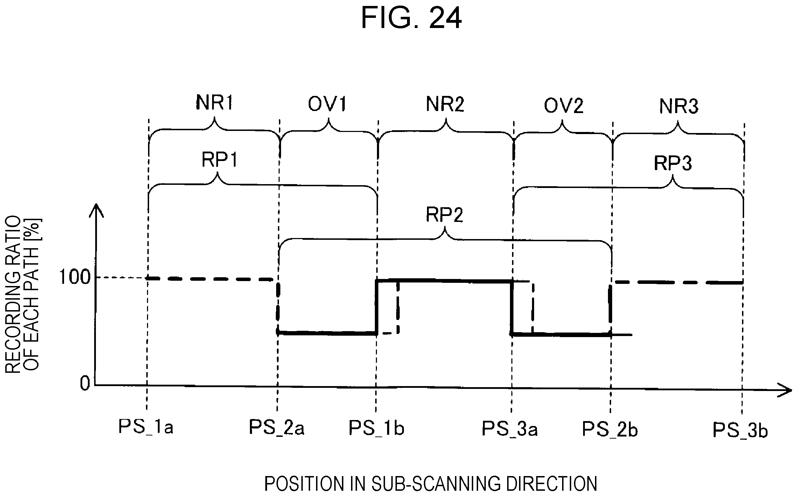

FIG. 24 is a diagram illustrating a relationship between a position in the sub-scanning direction DS and a recording ratio of each path in a comparative example in which the recording ratio of each path in the overlapping regions OV1 and OV2 is constant, unlike the present embodiment. FIG. 24 has the same manner as FIG. 22, except that the recording ratio in the overlapping regions OV1 and OV2 is constant.

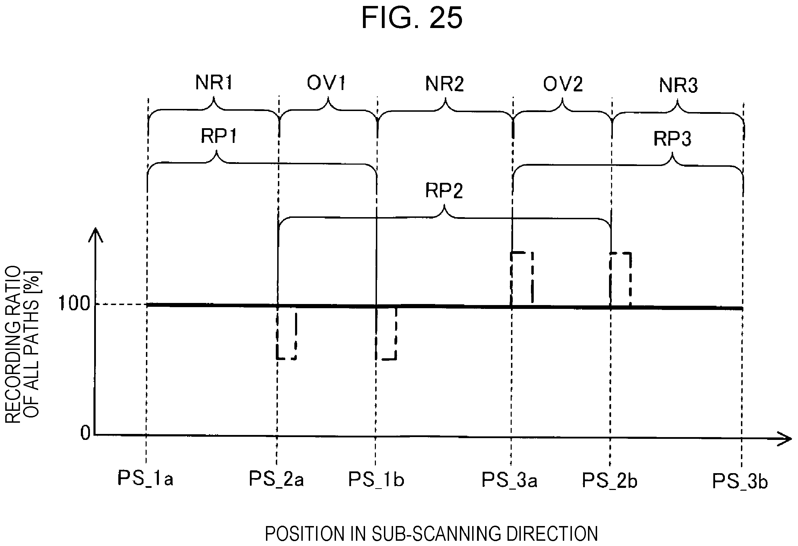

FIG. 25 is a diagram illustrating a relationship between a position in the sub-scanning direction DS and a recording ratio of all paths in a comparative example in which the recording ratio of each path in the overlapping regions OV1 and OV2 is constant, unlike the present embodiment. In FIG. 25, a total of a recording ratio by the first printing operation, a recording ratio by the second printing operation, and a recording ratio by the third printing operation is illustrated by a solid line. Further, in the same manner as the two-dot chain line in FIG. 24, a total when the position of the head 3a in the sub-scanning direction DS deviates from a regular position in the second printing operation is indicated by two-dot chain lines.

As illustrated in FIG. 25, when the position of the head 3a in the sub-scanning direction DS deviates from a regular position in the second printing operation, in the comparative example as compared with the case illustrated in FIG. 23 described above in the present embodiment, a fluctuation in the total of the recording ratio by the first printing operation, the recording ratio by the second printing operation, and the recording ratio by the third printing operation is large.

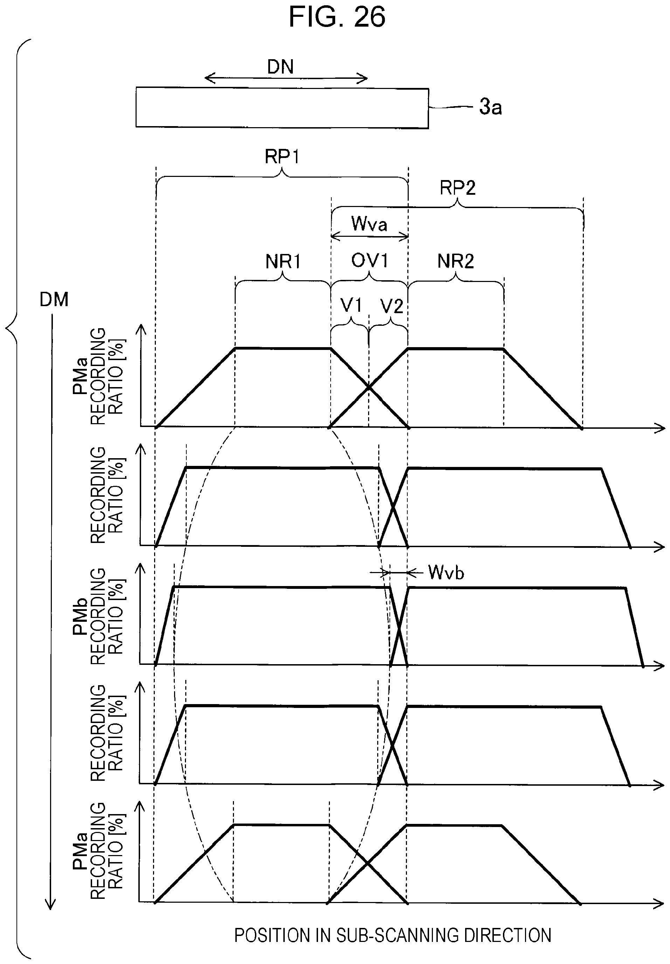

FIG. 26 is a diagram describing a recording ratio at each position in the main scanning direction DM. As illustrated in FIG. 26, a ratio of a recording pixel in the first printing operation to a recording pixel in the second printing operation is set for each position in the main scanning direction DM.

Here, at a time of execution of each of the first printing operation and the second printing operation, the amount of change per unit width in the ratio of the recording pixel at the second main scanning position PMb is more than the change amount per unit width in the ratio of the recording pixel at the first main scanning position PMa.

Further, as illustrated by the two-dot chain line in FIG. 26, the ratio of the recording pixels at the time of the execution of each of the first printing operation and the second printing operation is gradually changed as a printing position is moved from one position to the other position of the first main scanning position PMa and the second main scanning position PMb.

As described above, the three-dimensional object printing apparatus 1 includes the head 3a and the robot 2, and sequentially executes the first printing operation and the second printing operation as the printing operation. The plurality of nozzles N are provided at the head 3a. The robot 2 relatively moves the head 3a with respect to the three-dimensional workpiece W. In the printing operation, an ink, which is an example of a "liquid", is ejected from the head 3a toward the printing region RP of the workpiece W while the robot 2 operating.

Here, when defining the first printing region RP1, the second printing region RP2, the overlapping region OV1, and the first overlapping region V1, in the first overlapping region V1, the ratio of the recording pixels by the first printing operation is more than the ratio of recording pixels by the second printing operation. The first printing region RP1 is a region in which the ink is applied onto the workpiece W when the first printing operation is executed. The second printing region RP2 is a region in which the ink is applied onto the workpiece W when the second printing operation is executed. The overlapping region OV1 is a region in which the first printing region RP1 and the second printing region RP2 overlap with each other. The first overlapping region V1 is a region in which the ejection distance PG of the ink from the plurality of nozzles N to the overlapping region OV1 when the first printing operation is executed is less than the ejection distance PG of the ink from the plurality of nozzles N to the overlapping region OV1 when the second printing operation is executed, in the overlapping region OV1.

In the above three-dimensional object printing apparatus 1, since the ratio of the recording pixel by the first printing operation is more than the ratio of the recording pixel by the second printing operation in the first overlapping region V1, the ratio of the recording pixels with a large landing error can be relatively reduced in the first overlapping region V1. As a result, it is possible to reduce the deterioration of the image quality as compared with the aspect in which the ratio of the recorded pixels by each of the first printing operation and the second printing operation in the first overlapping region V1 is constant.

Here, as described above, when each of the first printing operation and the second printing operation is executed, the robot 2 operates such that the ejection distance PG of the ink from the nozzle N corresponding to the second nozzle to the printing region RP is less than the ejection distance PG of the ink from the nozzle N corresponding to the first nozzle to the printing region RP. Here, the plurality of nozzles N constitute the nozzle array NL, the nozzle N corresponding to the first nozzle is the nozzle N closer to an end portion than a center of the nozzle array NL among the plurality of nozzles N, and the nozzle N corresponding to the second nozzle is the nozzle N closer to the center of the nozzle array NL than the first nozzle among the plurality of nozzles N. When the robot 2 operates in this manner, the effect by making the ratio of the recording pixels by the first printing operation more than the ratio of the recording pixels by the second printing operation in the first overlapping region V1 becomes remarkable.

Further, as described above, when defining the second overlapping region V2, in the second overlapping region V2, the ratio of the recording pixels by the second printing operation is more than the ratio of the recording pixels by the first printing operation. Here, in the second overlapping region V2, the ejection distance PG of the ink from the plurality of nozzles N to the overlapping region OV1 when the first printing operation is executed is less than the ejection distance PG of the ink from the plurality of nozzles N to the overlapping region OV1 when the second printing operation is executed, in the overlapping region OV1. In this manner, since the ratio of the recording pixel by the second printing operation is more than the ratio of the recording pixel by the first printing operation in the second overlapping region V2, the ratio of the recording pixels with a large landing error can be relatively reduced in the second overlapping region V2. As a result, it is possible to reduce the deterioration of the image quality as compared with the aspect in which the ratio of the recorded pixels by each of the first printing operation and the second printing operation in the second overlapping region V2 is constant.

Further, as described above, the ink ejection distance PG from at least one nozzle N among the plurality of nozzles N to the printing region RP is changed during the execution of the printing operation. In such a case, the effect by making the ratio of the recording pixels by the first printing operation more than the ratio of the recording pixels by the second printing operation in the overlapping region OV1 becomes remarkable.

Further, as described above, in the overlapping region OV1, the first overlapping region V1 may be regarded as a region in which the landing angle θ of the ink from the plurality of nozzles N to the overlapping region OV1 when the first printing operation is executed is closer to 90° than the landing angle θ of the ink from the plurality of nozzles N to the overlapping region OV1 when the second printing operation is executed. In this case as well, since the ratio of the recording pixels by the first printing operation is more than the ratio of the recording pixels by the second printing operation in the first overlapping region V1, the ratio of the recording pixels with a large landing error can be relatively reduced in the first overlapping region V1.

As described above, in the overlapping region OV1, the second overlapping region V2 may be regarded as a region in which the landing angle θ of the ink from the plurality of nozzles N to the overlapping region OV1 when the second printing operation is executed is closer to 90° than the landing angle θ of the ink from the nozzle N to the overlapping region OV1 when the first printing operation is executed. In this case as well, since the ratio of the recording pixels by the second printing operation in the second overlapping region V2 is more than the ratio of the recording pixels by the first printing operation, the ratio of the recording pixels with a large landing error can be relatively reduced in the second overlapping region V2.

Further, as described above, the landing angle θ of the ink from at least one nozzle N among the plurality of nozzles N to the printing region RP is changed during the execution of the printing operation. In such a case, the effect by making the ratio of the recording pixels by the first printing operation more than the ratio of the recording pixels by the second printing operation in the overlapping region OV1 becomes remarkable.

Further, as described above, when defining the first main scanning position PMa and the second main scanning position PMb, the width Wvb of the overlapping region OV1 at the second main scanning position PMb is less than the width Wva of the overlapping region OV1 at the first main scanning position PMa. Here, the first main scanning position PMa and the second main scanning position PMb are two positions different from each other in the main scanning direction DM. The main scanning direction DM is a direction in which a relative position between the head 3a and the workpiece W is changed when the first printing operation or the second printing operation is executed. In this manner, by making the width Wvb of the overlapping region OV1 at the second main scanning position PMb less than the width Wva of the overlapping region OV1 at the first main scanning position PMa, the printing can be efficiently performed while occurrence of white stripes or unevenness in the printing image is reduced.

Further, as described above, during the execution of each of the first printing operation and the second printing operation, the amount of change per unit width in the ratio of the recording pixels at a portion corresponding to the second main scanning position PMb on the surface of the workpiece W is more than the amount of change per unit width in the ratio of recording pixels at a portion corresponding to the first main scanning position PMa on the surface of the workpiece W. Therefore, an appropriate recording ratio can be set according to the width of the printing region RP.

As described above, the ratio of the recording pixels at the time of the execution of each of the first printing operation and the second printing operation is gradually changed as a printing position is moved from one position to the other position of the first main scanning position PMa and the second main scanning position PMb. Therefore, an appropriate recording ratio can be set according to the width of the printing region RP.

As described above, the three-dimensional object printing apparatus 1 further includes the control portion 8. The control portion 8 controls each operation of the head 3a and the robot 2. Based on the ejection distance PG of the ink to the printing region RP at the first main scanning position PMa when one or both of the first printing operation and the second printing operation are executed, the control portion 8 sets a ratio of the recording pixel by the first printing operation and the recording pixel by the second printing operation at the first main scanning position PMa. Therefore, in the first overlapping region V1, the ratio of the recording pixels by the first printing operation can be more than the ratio of the recording pixels by the second printing operation.

As described above, based on the ejection distance PG of the ink to the printing region RP at the second main scanning position PMb when one or both of the first printing operation and the second printing operation are executed, the control portion 8 sets a ratio of the recording pixel by the first printing operation and the recording pixel by the second printing operation at the second main scanning position PMb. Therefore, in the first overlapping region V1, the ratio of the recording pixels by the first printing operation can be more than the ratio of the recording pixels by the second printing operation.

Further, as described above, based on the landing angle θ of the ink to the printing region RP at the first main scanning position PMa when one or both of the first printing operation and the second printing operation are executed, the control portion 8 sets a ratio of the recording pixel by the first printing operation and the recording pixel by the second printing operation at the first main scanning position PMa. Therefore, in the first overlapping region V1, the ratio of the recording pixels by the first printing operation can be more than the ratio of the recording pixels by the second printing operation.

### 2. Second Embodiment

Hereinafter, a second embodiment of the present disclosure will be described. In the embodiment described below as an example, the reference numerals used in the description of the first embodiment will be assigned to elements having the same effects and functions as those of the first embodiment, and each detailed description thereof will be appropriately omitted.

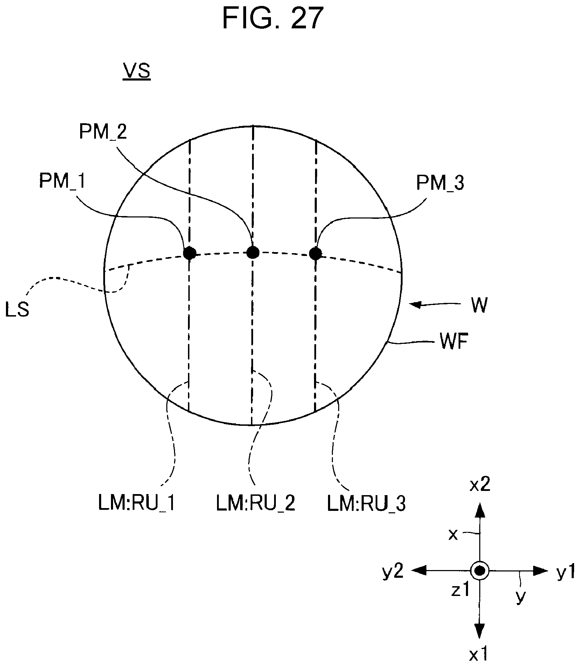

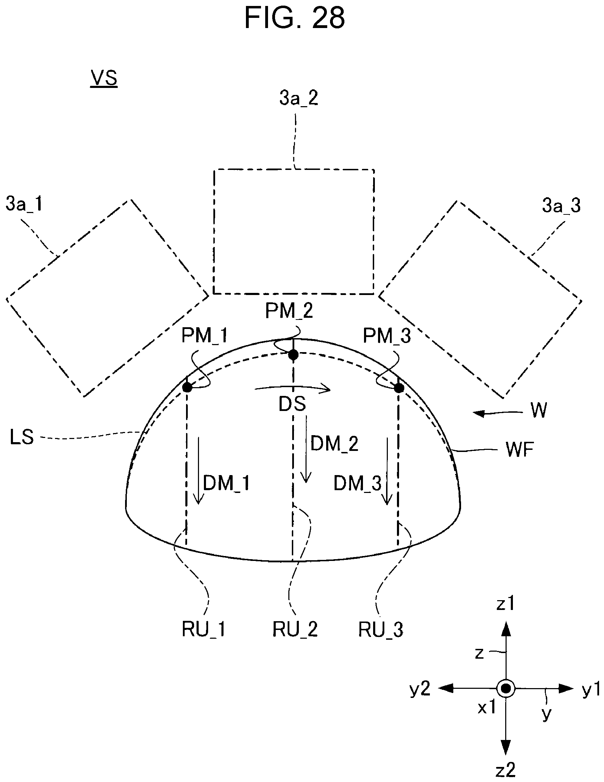

FIGS. 27 and 28 are diagrams describing the printing paths RU_1 to RU_3 according to the second embodiment. FIG. 27 illustrates the workpiece W and the printing paths RU_1 to RU_3 in the virtual space VS, when viewed in the z2 direction. FIG. 28 illustrates the workpiece W and the printing paths RU_1 to RU_3 in the virtual space VS, when viewed in the x2 direction.

The present embodiment has the same manner as the first embodiment described above, except that shapes of the printing paths RU_1 to RU_3 are different from each other. In the present embodiment, intervals between a plurality of printing paths RU are constant over the entire region in the main scanning direction DM. Therefore, printing can be performed in a wide printing region with a small number of printing paths RU. When such a printing path RU is created, a plurality of virtual main scanning planes VPM parallel to each other are used in the third step S13.

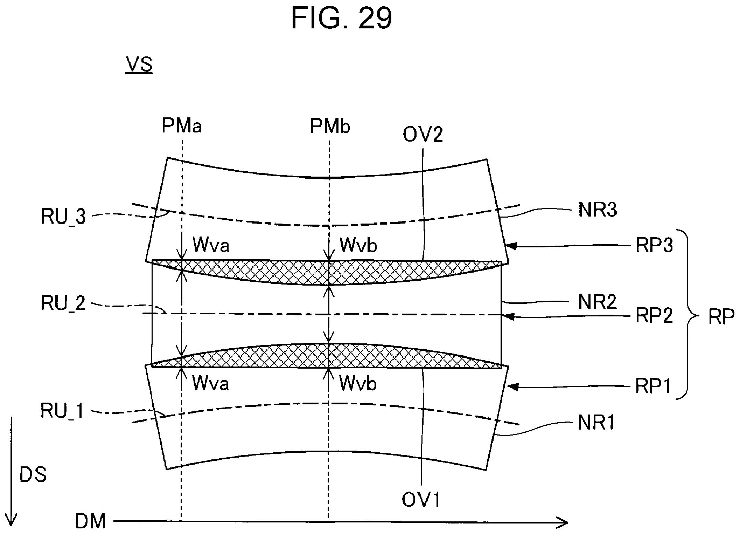

FIG. 29 is a diagram illustrating the printing region RP according to the second embodiment. In the present embodiment, the width Wvb of the overlapping region OV1 at the second main scanning position PMb is more than the width Wva of the overlapping region OV1 at the first main scanning position PMa. In the same manner, the width Wvb of the overlapping region OV2 at the second main scanning position PMb is more than the width Wva of the overlapping region OV2 at the first main scanning position PMa.

With the above second embodiment as well, it is possible to set an appropriate printing operation while increasing productivity of the printing. In the present embodiment, as described above, in the third step S13, the first virtual main scanning plane VPM_1 and the second virtual main scanning plane VPM_2 are parallel to each other. Therefore, a printing region by the printing operation using the printing path RU_1 and a printing region by the printing operation using the printing path RU_2 can be overlapped with a small area. As a result, the printing can be performed in a wide printing region with a small number of printing paths.

### 3. Modification Example

Each embodiment in the above examples can be variously modified. Specific modification aspects that can be applied to each embodiment described above will be described below. The two or more aspects freely selected from the following examples can be appropriately merged within a range not mutually contradictory.

### 3-1. Modification Example 1

In the embodiment described above, the aspect in which the printing region RP has a shape along a true spherical surface is described. Meanwhile, the present disclosure is not limited to this aspect.

For example, when the workpiece W is an elliptical body such as a rugby ball, a curvature of a portion corresponding to the first main scanning position PMa on a surface of the workpiece W may be more than a curvature of a portion corresponding to the second main scanning position PMb on the surface of the workpiece W. In this case, by making the width Wvb of the overlapping region OV1 at the second main scanning position PMb less than the width Wva of the overlapping region OV1 at the first main scanning position PMa, it is possible to reduce occurrence of white stripes in a printing image.

In this case, the curvature of the portion corresponding to the first main scanning position PMa on the surface of the workpiece W may be less than the curvature of the portion corresponding to the second main scanning position PMb on the surface of the workpiece W. In this case, by making the width Wvb of the overlapping region OV1 at the second main scanning position PMb less than the width Wva of the overlapping region OV1 at the first main scanning position PMa, it is possible to reduce occurrence of unevenness in the printing image.

### 3-2. Modification Example 2

In the embodiment described above, the aspect in which some candidate paths LM among the plurality of candidate paths LM are selected as the printing paths RU is described. Meanwhile, the present disclosure is not limited to this aspect. For example, all of the plurality of candidate paths LM may be set as the printing paths RU. That is, in the candidate path creation step S10, the candidate path LM is created as the printing path RU. In this case, the ejection condition acquisition step S20 and the printing path selection step S40 may be omitted.

### 3-3. Modification Example 3

In the embodiment described above, the aspect in which the candidate path creation step S10 includes the first step S11, the second step S12, and the third step S13 is described. Meanwhile, the method of creating the plurality of candidate paths LM in the candidate path creation step S10 is not limited to this aspect. For example, the first step S11 and the second step S12 may be omitted. In this case, for example, in the candidate path creation step S10, the candidate path LM may be set by appropriately setting the virtual main scanning plane VPM in the third step S13.

### 3-4. Modification Example 4

In the embodiment described above, the configuration using the 6-axis vertical multi-axis robot as the robot is described. Meanwhile, the configuration is not limited to this configuration. The robot may be, for example, a vertical multi-axis robot other than the 6-axis robot, or a horizontal multi-axis robot. Further, the arm portion of the robot may have a telescopic mechanism, a linear motion mechanism, or the like in addition to the joint configured with the rotation mechanism. Meanwhile, from the viewpoint of the balance between the print quality in the printing operation and the degree of freedom of the robot operation in the non-printing operation, the robot may be a multi-axis robot having 6 axes or more.

### 3-5. Modification Example 5

In the embodiment described above, the configuration using screwing or the like as a method of fixing the head to the robot is described, and the configuration is not limited to this configuration. For example, the head may be fixed to the robot by gripping the head with a gripping mechanism such as a hand mounted as an end effector of the robot.

### 3-6. Modification Example 6

Although the robot having the configuration for moving the head is illustrated in the embodiment described above, the present disclosure is not limited to this configuration. For example, the position of the head may be fixed, the workpiece may be moved by the robot, and the position and the posture of the workpiece to the head may be changed three-dimensionally. In this case, for example, the workpiece is gripped by a gripping mechanism such as a hand mounted to the tip of the robot arm.

### 3-7. Modification Example 7

In the embodiment described above, the configuration in which printing is performed by using one type of ink is described. Meanwhile, the configuration is not limited to this configuration, and the present disclosure can be applied to a configuration in which printing is performed by using two or more types of ink.

### 3-8. Modification Example 8

The use of the three-dimensional object printing apparatus of the present disclosure is not limited to image printing. For example, a three-dimensional object printing apparatus that ejects a solution of a coloring material is used as a manufacturing apparatus of forming a color filter of a liquid crystal display apparatus. Further, a three-dimensional object printing apparatus that ejects a solution of a conductive material is used as a manufacturing apparatus of forming wirings or electrodes on a wiring substrate. In addition, the three-dimensional object printing apparatus can also be used as a jet dispenser of applying a liquid such as an adhesive to a medium.

## Claims

1. A three-dimensional object printing apparatus comprising:
a head having a plurality of nozzles;
a robot that moves the head with respect to a three-dimensional workpiece; and
a control portion that sequentially executes a first printing operation and a second printing operation as a printing operation of ejecting a liquid from the head toward a printing region of the workpiece while operating the robot, wherein
when a region on the workpiece onto which the liquid is applied in the first printing operation is set as a first printing region,
a region on the workpiece onto which the liquid is applied in the second printing operation is set as a second printing region,
a region in which the first printing region and the second printing region overlap with each other is set as an overlapping region, and
in the overlapping region, a region in which an ejection distance of the liquid from the plurality of nozzles to the overlapping region in the first printing operation is less than an ejection distance of the liquid from the plurality of nozzles to the overlapping region in the second printing operation is set as a first overlapping region,
in the first overlapping region, a ratio of recording pixels by the first printing operation is more than a ratio of recording pixels by the second printing operation.

2. The three-dimensional object printing apparatus according to claim 1, wherein
the plurality of nozzles form a nozzle array, and
when a nozzle provided at an end portion of the nozzle array is set as a first nozzle, and
a nozzle provided at a center of the nozzle array is set as a second nozzle,
in the first printing operation and the second printing operation, the robot operates such that an ejection distance of the liquid from the second nozzle to the printing region is less than an ejection distance of the liquid from the first nozzle to the printing region.

3. The three-dimensional object printing apparatus according to claim 1, wherein
when in the overlapping region, a region in which the ejection distance of the liquid from the plurality of nozzles to the overlapping region in the second printing operation is less than the ejection distance of the liquid from the plurality of nozzles to the overlapping region in the first printing operation is set as a second overlapping region,
in the second overlapping region, a ratio of recording pixels by the second printing operation is more than a ratio of recording pixels by the first printing operation.

4. The three-dimensional object printing apparatus according to claim 1, wherein
an ejection distance of the liquid from at least one nozzle among the plurality of nozzles to the printing region is changed during the printing operation.

5. A three-dimensional object printing apparatus comprising:
a head having a plurality of nozzles;
a robot that moves the head with respect to a three-dimensional workpiece; and
a control portion that sequentially executes a first printing operation and a second printing operation as a printing operation of ejecting a liquid from the head toward a printing region of the workpiece while operating the robot, wherein
when a region on the workpiece onto which the liquid is applied in the first printing operation is set as a first printing region,
a region on the workpiece onto which the liquid is applied in the second printing operation is set as a second printing region,
a region in which the first printing region and the second printing region overlap with each other is set as an overlapping region, and
in the overlapping region, a region in which a landing angle of the liquid from the plurality of nozzles to the overlapping region in the first printing operation is closer to 90° than a landing angle of the liquid from the plurality of nozzles to the overlapping region in the second printing operation is set as a first overlapping region,
in the first overlapping region, a ratio of recording pixels by the first printing operation is more than a ratio of recording pixels by the second printing operation.

6. The three-dimensional object printing apparatus according to claim 5, wherein
when in the overlapping region, a region in which the landing angle of the liquid from the plurality of nozzles to the overlapping region in the second printing operation is closer to 90° than the landing angle of the liquid from the plurality of nozzles to the overlapping region in the first printing operation is set as a second overlapping region,
in the second overlapping region, a ratio of recording pixels by the second printing operation is more than a ratio of recording pixels by the first printing operation.

7. The three-dimensional object printing apparatus according to claim 5, wherein
a landing angle of the liquid from at least one nozzle among the plurality of nozzles to the printing region is changed during the printing operation.

8. The three-dimensional object printing apparatus according to claim 2, wherein
when a direction in which a relative position of the head and the workpiece is changed during the first printing operation or the second printing operation is set as a main scanning direction, and
two different positions from each other in the main scanning direction are set as a first main scanning position and a second main scanning position,
a width of the overlapping region at the second main scanning position is less than a width of the overlapping region at the first main scanning position.

9. The three-dimensional object printing apparatus according to claim 8, wherein
a curvature of a portion corresponding to the first main scanning position on a surface of the workpiece is more than a curvature of a portion corresponding to the second main scanning position on the surface of the workpiece.

10. The three-dimensional object printing apparatus according to claim 8, wherein
a curvature of a portion corresponding to the first main scanning position on a surface of the workpiece is less than a curvature of a portion corresponding to the second main scanning position on the surface of the workpiece.

11. The three-dimensional object printing apparatus according to claim 8, wherein
in the first printing operation and the second printing operation, an amount of change per unit width in a ratio of recording pixels in a portion corresponding to the second main scanning position on a surface of the workpiece is more than an amount of change per unit width in a ratio of recording pixels in a portion corresponding to the first main scanning position on the surface of the workpiece.

12. The three-dimensional object printing apparatus according to claim 11, wherein
the ratio of the recording pixels in each of the first printing operation and the second printing operation is gradually changed as a printing position is moved from one position to another position between the first main scanning position and the second main scanning position.

13. The three-dimensional object printing apparatus according to claim 2, wherein
when a direction in which a relative position of the head and the workpiece is changed during the first printing operation or the second printing operation is set as a main scanning direction, and
one position in the main scanning direction is set as a first main scanning position,
based on an ejection distance of the liquid to the printing region at the first main scanning position in one or both of the first printing operation and the second printing operation, the control portion sets the ratio of recording pixels by the first printing operation to recording pixels by the second printing operation at the first main scanning position.

14. The three-dimensional object printing apparatus according to claim 13, wherein
when a position different from the first main scanning position in the main scanning direction is set as a second main scanning position,
based on an ejection distance of the liquid to the printing region at the second main scanning position in one or both of the first printing operation and the second printing operation, the control portion sets a ratio of recording pixels by the first printing operation to recording pixels by the second printing operation at the second main scanning position.

15. The three-dimensional object printing apparatus according to claim 5, wherein
when a direction in which a relative position of the head and the workpiece is changed during the first printing operation or the second printing operation is set as a main scanning direction, and
one position in the main scanning direction is set as a first main scanning position,
based on a landing angle of the liquid on the printing region at the first main scanning position in one or both of the first printing operation and the second printing operation, the control portion sets a ratio of recording pixels by the first printing operation to recording pixels by the second printing operation at the first main scanning position.

16. The three-dimensional object printing apparatus according to claim 15, wherein
when a position different from the first main scanning position in the main scanning direction is set as a second main scanning position,
based on a landing angle of the liquid on the printing region at the second main scanning position in one or both of the first printing operation and the second printing operation, the control portion sets a ratio of recording pixels by the first printing operation to recording pixels by the second printing operation at the second main scanning position.

17. A printing method using a three-dimensional object printing apparatus including a head having a plurality of nozzles and a robot that moves the head with respect to a three-dimensional workpiece, the printing method comprising:
a first printing operation of ejecting a liquid from the head toward a first printing region of the workpiece while operating the robot; and
a second printing operation of ejecting the liquid from the head toward a second printing region of the workpiece while operating the robot,
wherein the first printing region and the second printing region include an overlapping region that is a region in which the first printing region and the second printing region overlap with each other, and
when in the overlapping region, a region in which an ejection distance of the liquid from the plurality of nozzles to the overlapping region in the first printing operation is less than an ejection distance of the liquid from the plurality of nozzles to the overlapping region in the second printing operation is set as a first overlapping region, in the first overlapping region, a ratio of recording pixels by the first printing operation is more than a ratio of recording pixels by the second printing operation.
